# FASCICULE DE BREVET EUROPEEN

(11) **EP 4 274 763 B1**
(45) Date de publication et mention de la délivrance du brevet: **25.06.2025**
(21) Numéro de dépôt: 21706637.2
(22) Date de dépôt: 08.01.2021
(51) Int. Cl.: B60M 1/02, H01R 4/64, B60M 1/30

(54) **DISPOSITIF D'INTERCONNEXION ELECTRIQUE POUR LA MISE A LA TERRE DE RAILS FERROVIAIRES**
ELEKTRISCHE VERBINDUNGSVORRICHTUNG ZUM ERDEN VON EISENBAHNSCHIENEN
ELECTRICAL INTERCONNECTION DEVICE FOR GROUNDING RAILWAY RAILS

(43) Date de publication de la demande: 15.11.2023
(73) Titulaire: Etablissements CATU, 92220 Bagneux (FR)
(72) Inventeur: PLESTAN, Alain, 92350 LE PLESSIS ROBINSON (FR); BOULARD, Hervé, 92220 BAGNEUX (FR); SANESI, Sébastien, 93460 Gournay sur Marne (FR)
(74) Mandataire: Santarelli
(86) Numéro de dépôt international: PCT/FR2021/050025
(87) Numéro de publication internationale: WO 2022/148914

(56) Documents cités:
- CN-B- 101 554 842
- DE-C- 405 128
- FR-A1- 2 506 235
- US-A1- 2004 223 280

## Description

### Domaine technique de l'invention

L'invention concerne d'une part un dispositif d'interconnexion électrique pour mise à la terre de rails ferroviaires ainsi qu'un ensemble comportant un tel dispositif et un ou plusieurs accessoires et d'autre part, un procédé d'interconnexion électrique à l'aide d'un tel dispositif pour mise à la terre d'un rail ferroviaire roulant avec un rail ferroviaire d'alimentation.

### Etat de la technique

On connaît des dispositifs d'interconnexion électrique pour mise à la terre de rails ferroviaires, notamment des dispositifs pourvus d'un cadre, d'une poignée articulée assujettie au cadre, de deux sabots montés aux extrémités opposées du cadre et d'un conducteur électrique reliant électriquement les deux sabots. Un des sabots est prévu pour venir en appui contre un rail roulant tandis que l'autre des sabots est prévu pour venir en appui contre un rail d'alimentation.

Le document DE 405128C décrit un tel dispositif de connexion.

### Exposé de l'invention

L'invention vise à fournir un dispositif d'interconnexion électrique pour mise à la terre de rails ferroviaire, d'un genre similaire et qui soit particulièrement simple, performant et commode à l'utilisation.

L'invention a ainsi pour objet, selon un premier aspect, un dispositif d'interconnexion électrique pour mise à la terre de rails ferroviaires, comportant un corps principal, au moins un premier organe d'assujettissement monté à une première extrémité du corps principal et configuré pour être assujetti mécaniquement et électriquement à un rail ferroviaire dit roulant, au moins un deuxième organe d'assujettissement monté à une deuxième extrémité du corps principal opposée à sa première extrémité et configuré pour être assujetti mécaniquement et électriquement à un rail ferroviaire dit d'alimentation, dans lequel le corps principal est pourvu d'au moins un fourreau et d'au moins un insert télescopique monté mobile en translation et en rotation par rapport au fourreau, avec l'un dudit au moins un premier organe d'assujettissement et dudit au moins un deuxième organe d'assujettissement qui est assujetti mécaniquement à une extrémité libre de l'insert télescopique ; grâce à quoi le dispositif d'interconnexion électrique est configuré pour admettre une configuration rétractée dans laquelle l'insert télescopique est introduit dans le fourreau et une configuration déployée dans laquelle l'insert télescopique est au moins partiellement extrait du fourreau, caractérisé en ce que l'un dudit au moins un premier organe d'assujettissement et dudit au moins un deuxième organe d'assujettissement est configuré pour être disposé dans une orientation prédéterminée parmi une pluralité d'orientations, quel que soit la configuration du dispositif d'interconnexion électrique.

Le fait de pouvoir déployer/rétracter l'insert télescopique dans le fourreau permet d'adapter la longueur globale du dispositif d'interconnexion électrique à la distance séparant le rail d'alimentation du rail roulant sur lesquels ce dispositif d'interconnexion électrique est mis en prise par l'intermédiaire des premier et deuxième organes d'assujettissement, en vue de l'interconnexion électrique de ces rails pour leur mise à la terre.

En effet, grâce à la fonction télescopique de l'insert par rapport au fourreau, il est possible d'adapter la longueur du corps principal à la distance séparant les rails roulant et d'alimentation.

Au surplus, le fait de pouvoir modifier et choisir l'orientation de l'un des premier et deuxième organes d'assujettissement autorise la mise en prise de ce dernier sur le haut ou sur le bas du rail ferroviaire sur lequel il est assujetti. Cela a également un effet sur la longueur globale du dispositif.

En effet, la rotation de l'insert télescopique dans le fourreau entraîne la rotation de l'organe d'assujettissement qui est assujetti à cet insert télescopique. Il est donc possible de retourner cet organe d'assujettissement en fonction de l'endroit où il doit venir en appui et au contact du rail ferroviaire.

Le dispositif d'interconnexion électrique selon l'invention est ainsi particulièrement polyvalent et adaptable en ce qu'il peut être utilisé pour différentes distances d'écartement entre les rails roulant et d'alimentation et quel que soit l'endroit sur le rail où l'organe d'assujettissement monté sur l'insert doit se mettre en prise.

Des caractéristiques préférées particulièrement simples, commodes et économiques du dispositif selon l'invention sont présentées ci-dessous.

Le dispositif peut être pourvu d'orifices de positionnement ménagés à la fois dans le fourreau et dans l'insert télescopique, ainsi qu'un organe de fixation monté dans les orifices de positionnement du fourreau et de l'insert télescopique lorsqu'ils sont en regard l'un de l'autre ; grâce à quoi l'insert télescopique peut être maintenu dans une pluralité de positions distinctes par rapport au fourreau.

Le corps principal peut comporter un mécanisme de serrage assujetti au fourreau s'étendant vers la première extrémité du corps principal, et le premier organe d'assujettissement peut être monté sur le mécanisme de serrage.

Le mécanisme de serrage peut être pourvu d'une vis de manœuvre, d'un organe de guidage partiellement logé dans le fourreau et prévu pour guider la vis de manœuvre, et d'une bague de serrage et de verrouillage montée mobile en rotation sur la vis de manœuvre, entre la première extrémité du corps principal et l'organe de guidage.

Dans une configuration verrouillée du dispositif, la bague de serrage et de verrouillage peut être disposée en appui contre l'organe de guidage et le dispositif peut comporter un organe de verrouillage monté verrouillé sur la bague de serrage et de verrouillage ensemble avec l'organe de guidage.

La vis de manœuvre peut être partiellement logée dans un espace interne ménagé dans le fourreau et présenter un orifice ménagé à une extrémité dans laquelle est introduite un organe de butée.

Le deuxième organe d'assujettissement peut être monté mobile en rotation sur une extrémité libre de l'insert télescopique ; et/ou le premier organe d'assujettissement peut être monté mobile en rotation sur une extrémité libre de la vis de manœuvre.

L'organe de guidage peut comporter une paroi annulaire en forme de flasque disposé en appui et à l'extérieur du fourreau, et une paroi cylindrique en saillie de la paroi annulaire et logée dans un espace interne ménagé dans le fourreau par emboîtement d'un côté du fourreau, et une pluralité de trous sont formés dans la paroi annulaire ; et la bague de serrage et de verrouillage peut comporter une paroi annulaire ayant un contour externe qui est ici dentelé et qui est prévu pour venir en appui contre la paroi annulaire de l'organe de guidage.

Le contour externe dentelé peut être pourvu de creux pour permettre l'introduction d'une portion de l'organe de verrouillage pour que, lorsqu'un creux du contour externe se trouve en regard d'un trou de la paroi annulaire de l'organe de guidage, la portion de l'organe de verrouillage puisse traverser à la fois un creux du contour externe et un trou respectif en vue d'immobiliser en rotation la bague de serrage et de verrouillage ensemble avec l'organe de guidage.

L'organe de guidage peut comporter une surface interne filetée qui est traversée par la vis de manœuvre, avec une extrémité qui se trouve à l'opposé de la paroi annulaire, et la bague de serrage et de verrouillage peut comporter en outre une paroi cylindrique traversée par la vis de manoeuvre et ayant une face interne ménagée de sorte à former un système à double écrous.

Le dispositif peut comporter une poignée de préhension formée d'un manche assujetti mécaniquement via une liaison pivot sur un manchon, lequel est monté serré sur le corps principal.

Le premier organe d'assujettissement est d'un premier type et est formé par une pièce en L avec rebord, pourvue d'une première branche, d'une deuxième branche s'étendant depuis la première branche, d'un rebord s'étendant depuis la première branche à l'opposé de la deuxième branche, formant ainsi un espace de préhension et de réception délimité par une face interne de contact pour assurer l'interconnexion électrique avec le rail roulant ; et/ou le deuxième organe d'assujettissement est d'un deuxième type et est formé par une pièce en L, pourvue d'une première branche et d'une deuxième branche s'étendant depuis la première branche et formant ainsi un espace de préhension et de réception délimité par une face interne de contact pour assurer l'interconnexion électrique avec le rail d'alimentation ; et/ou le premier organe d'assujettissement est d'un troisième type et est pourvu d'une paroi principale inclinée et/ou incurvée ayant une face externe configurée pour former essentiellement une face de contact pour venir en appui et au contact du rail roulant, et de crochets de fixation s'étendant depuis un bord de la paroi principale inclinée et/ou incurvée.

L'invention a aussi pour objet, selon un deuxième aspect, un ensemble comportant un dispositif d'interconnexion électrique tel que décrit ci-dessus ainsi qu'un ou plusieurs accessoires, dont au moins un premier organe d'assujettissement d'un premier type configuré pour être monté à une première extrémité d'un corps principal du dispositif d'interconnexion électrique et pour être assujetti mécaniquement et électriquement au haut d'un rail roulant, au moins un deuxième organe d'assujettissement d'un deuxième type configuré pour être monté à une deuxième extrémité du corps principal opposée à sa première extrémité, sur un insert télescopique du corps principal, et pour être assujetti mécaniquement et électriquement au haut ou au bas d'un rail d'alimentation en fonction de son orientation, et au moins un premier organe d'assujettissement d'un troisième type, différent de celui du premier type, configuré pour être monté à la première extrémité du corps principal et pour être assujetti mécaniquement et électriquement au bas du rail roulant.

Dans l'ensemble selon l'invention, le dispositif d'interconnexion électrique est fourni avec différents organes d'assujettissement, dont au moins un premier organe d'assujettissement d'un premier type et au moins un autre d'un troisième type, grâce à quoi il est possible de sélectionné le premier organe d'assujettissement en fonction de son positionnement au haut ou au bas du rail roulant ; tandis que le deuxième organe d'assujettissement peut quant à lui être orienté selon le besoin de positionnement au haut ou au bas du rail d'alimentation.

L'invention a encore pour objet, selon un troisième aspect, un procédé d'interconnexion électrique et de mise à la terre d'au moins un rail ferroviaire roulant avec un rail ferroviaire d'alimentation, à l'aide d'un dispositif d'interconnexion électrique tel que décrit ci-dessus, comportant les étapes de fournir un tel dispositif d'interconnexion électrique et de le disposer entre le rail roulant et le rail d'alimentation, de mettre en prise un premier organe d'assujettissement du dispositif d'interconnexion électrique sur le rail roulant, d'adapter la longueur du dispositif d'interconnexion électrique en déployant ou en rétractant un insert télescopique du ou dans un fourreau d'un corps principal du dispositif d'interconnexion électrique, d'adapter l'orientation d'un deuxième organe d'assujettissement du dispositif d'interconnexion électrique en tournant l'insert télescopique dans et par rapport au fourreau, et de mettre en prise le deuxième organe d'assujettissement sur le rail d'alimentation.

Le procédé peut comporter l'étape de sélectionner un premier organe d'assujettissement parmi l'un d'un premier type configuré pour être monté à une première extrémité du corps principal et pour être assujetti mécaniquement et électriquement au haut du rail roulant, et d'un troisième type, différent de celui du premier type, configuré pour être monté à la première extrémité du corps principal et pour être assujetti mécaniquement et électriquement au bas du rail roulant.

L'invention a encore pour objet, selon un quatrième aspect, un dispositif d'interconnexion électrique pour mise à la terre de rails ferroviaires, comportant un corps principal, au moins un premier organe d'assujettissement monté à une première extrémité du corps principal et configuré pour être assujetti mécaniquement et électriquement à un rail ferroviaire dit roulant, au moins un deuxième organe d'assujettissement monté à une deuxième extrémité du corps principal opposée à la première extrémité et configuré pour être assujetti mécaniquement et électriquement à un rail ferroviaire dit d'alimentation, caractérisé en ce que le corps principal a la forme d'un mono-bras pourvu d'un fourreau, d'un insert logé au moins partiellement dans le fourreau, s'étendant vers la deuxième extrémité du corps principal et sur lequel est assujetti le deuxième organe d'assujettissement, et d'un mécanisme de serrage assujetti au fourreau, s'étendant depuis le fourreau vers la première extrémité du corps principal et sur lequel est assujetti le premier organe d'assujettissement, ledit mécanisme de serrage étant configuré pour écarter les premier et deuxième organes d'assujettissement de sorte à les mettre en prise sur les rails roulant et d'alimentation respectifs, et le dispositif d'interconnexion électrique comporte en outre un organe de verrouillage configuré pour être monté et verrouillé sur le mécanisme de serrage ; grâce à quoi le dispositif d'interconnexion électrique est immobilisé dans une configuration prédéterminée dans laquelle les premier et deuxième organes d'assujettissement sont configurés pour interconnecter électriquement les rails roulant et d'alimentation pour leur mise à la terre.

Le fait que le corps principal du dispositif d'interconnexion électrique selon l'invention soit formé d'un mono-bras regroupant l'insert sur lequel est monté le deuxième organe d'assujettissement, le mécanisme de serrage sur lequel est monté le premier organe d'assujettissement, et aussi le fourreau interposé entre l'insert et le mécanisme de serrage, rend particulièrement compact le dispositif d'interconnexion électrique et aussi particulièrement commode son utilisation, dont la mise en position des premier et deuxième organes d'assujettissement sur les rails roulant et d'alimentation respectifs.

Au surplus, le dispositif d'interconnexion électrique selon l'invention permet, grâce au mécanisme de serrage et à l'organe de verrouillage de ce mécanisme, d'une part de sécuriser la mise en position des premier et deuxième organes d'assujettissement sur les rails roulant et d'alimentation respectifs et d'autre part, de sécuriser le maintien en position de ces premier et deuxième organes d'assujettissement. Ainsi, l'interconnexion électrique des rails roulant et d'alimentation est fiabilisée et leur mise à la terre assurée.

Il est en outre particulièrement commode de verrouiller le positionnement des premier et deuxième organes d'assujettissement par une seule action sur le mono-bras du corps principal et en particulier sur son mécanisme de serrage.

Le mécanisme de serrage peut être pourvu d'une vis de manœuvre, d'un organe de guidage partiellement logé dans le fourreau et prévu pour guider la vis de manœuvre, et d'une bague de serrage et de verrouillage montée mobile en rotation sur la vis de manœuvre, entre la première extrémité du corps principal et l'organe de guidage.

Dans la configuration verrouillée du dispositif, la bague de serrage et de verrouillage peut être disposée en appui contre l'organe de guidage et l'organe de verrouillage est monté verrouillé sur la bague de serrage et de verrouillage ensemble avec l'organe de guidage.

L'organe de guidage peut comporter une paroi annulaire en forme de flasque disposé en appui et à l'extérieur du fourreau, et une paroi cylindrique en saillie de la paroi annulaire et logée dans un espace interne ménagé dans le fourreau par emboîtement d'un côté du fourreau, et une pluralité de trous sont formés dans la paroi annulaire ; et la bague de serrage et de verrouillage peut comporter une paroi annulaire ayant un contour externe qui est ici dentelé et qui est prévu pour venir en appui contre la paroi annulaire de l'organe de guidage.

Le contour externe dentelé peut être pourvu de creux pour permettre l'introduction d'une portion de l'organe de verrouillage pour que, lorsqu'un creux du contour externe se trouve en regard d'un trou de la paroi annulaire de l'organe de guidage, la portion de l'organe de verrouillage puisse traverser à la fois un creux du contour externe et un trou respectif en vue d'immobiliser en rotation la bague de serrage et de verrouillage ensemble avec l'organe de guidage.

L'organe de guidage peut comporter une surface interne filetée qui est traversée par la vis de manœuvre, avec une extrémité qui se trouve à l'opposé de la paroi annulaire, et la bague de serrage et de verrouillage peut comporter en outre une paroi cylindrique traversée par la vis de manœuvre et ayant une face interne ménagée de sorte à former un système à double écrous.

La vis de manoeuvre peut être partiellement logée dans un espace interne ménagé dans le fourreau et présenter un orifice ménagé à une extrémité dans laquelle est introduite un organe de butée.

L'insert peut être télescopique et monté mobile en translation et en rotation par rapport au fourreau, avec l'un dudit au moins un premier organe d'assujettissement et dudit au moins un deuxième organe d'assujettissement qui est assujetti mécaniquement à une extrémité libre de l'insert télescopique ; grâce à quoi le dispositif d'interconnexion électrique est configuré pour admettre une configuration rétractée dans laquelle l'insert télescopique est introduit dans le fourreau et une configuration déployée dans laquelle l'insert télescopique est au moins partiellement extrait du fourreau, avec l'un dudit au moins un premier organe d'assujettissement et dudit au moins un deuxième organe d'assujettissement qui est configuré pour être disposé dans une orientation prédéterminée parmi une pluralité d'orientations, quel que soit la configuration du dispositif d'interconnexion électrique.

Le fait de pouvoir déployer/rétracter l'insert télescopique dans le fourreau permet d'adapter la longueur globale du dispositif d'interconnexion électrique à la distance séparant le rail d'alimentation du rail roulant sur lesquels ce dispositif d'interconnexion électrique est mis en prise par l'intermédiaire des premier et deuxième organes d'assujettissement, en vue de l'interconnexion électrique de ces rails pour leur mise à la terre.

En effet, grâce à la fonction télescopique de l'insert par rapport au fourreau, il est possible d'adapter la longueur du corps principal à la distance séparant les rails roulant et d'alimentation.

Au surplus, le fait de pouvoir modifier et choisir l'orientation de l'un des premier et deuxième organes d'assujettissement autorise la mise en prise de ce dernier sur le haut ou sur le bas du rail ferroviaire sur lequel il est assujetti. Cela a également un effet sur la longueur globale du dispositif.

En effet, la rotation de l'insert télescopique dans le fourreau entraîne la rotation de l'organe d'assujettissement qui est assujetti à cet insert télescopique. Il est donc possible de retourner cet organe d'assujettissement en fonction de l'endroit où il doit venir en appui et au contact du rail ferroviaire.

Le dispositif d'interconnexion électrique est ainsi particulièrement polyvalent et adaptable en ce qu'il peut être utilisé pour différentes distances d'écartement entre les rails roulant et d'alimentation et quel que soit l'endroit sur le rail où l'organe d'assujettissement monté sur l'insert doit se mettre en prise.

Le dispositif peut être pourvu d'orifices de positionnement ménagés à la fois dans le fourreau et dans l'insert télescopique, ainsi qu'un organe de fixation monté dans les orifices de positionnement du fourreau et de l'insert télescopique lorsqu'ils sont en regard l'un de l'autre ; grâce à quoi l'insert télescopique peut être maintenu dans une pluralité de positions distinctes par rapport au fourreau.

Le deuxième organe d'assujettissement peut être monté mobile en rotation sur une extrémité libre de l'insert télescopique ; et/ou le premier organe d'assujettissement peut être monté mobile en rotation sur une extrémité libre de la vis de manœuvre.

Le dispositif peut comporter une poignée de préhension formée d'un manche assujetti mécaniquement via une liaison pivot sur un manchon, lequel est monté serré sur le corps principal.

Le premier organe d'assujettissement est d'un premier type et est formé par une pièce en L avec rebord, pourvue d'une première branche, d'une deuxième branche s'étendant depuis la première branche, d'un rebord s'étendant depuis la première branche à l'opposé de la deuxième branche, formant ainsi un espace de préhension et de réception délimité par une face interne de contact pour assurer l'interconnexion électrique avec le rail roulant ; et/ou le deuxième organe d'assujettissement est d'un deuxième type et est formé par une pièce en L, pourvue d'une première branche et d'une deuxième branche s'étendant depuis la première branche et formant ainsi un espace de préhension et de réception délimité par une face interne de contact pour assurer l'interconnexion électrique avec le rail d'alimentation ; et/ou le premier organe d'assujettissement est d'un troisième type et est pourvu d'une paroi principale inclinée et/ou incurvée ayant une face externe configurée pour former essentiellement une face de contact pour venir en appui et au contact du rail roulant, et de crochets de fixation s'étendant depuis un bord de la paroi principale inclinée et/ou incurvée.

L'invention a aussi pour objet, selon un cinquième aspect, un ensemble comportant un dispositif d'interconnexion électrique tel que décrit ci-dessus ainsi qu'un ou plusieurs accessoires, dont au moins un premier organe d'assujettissement d'un premier type configuré pour être monté à une première extrémité d'un corps principal du dispositif d'interconnexion électrique et pour être assujetti mécaniquement et électriquement au haut d'un rail roulant, au moins un deuxième organe d'assujettissement d'un deuxième type configuré pour être monté à une deuxième extrémité du corps principal opposée à sa première extrémité, sur un insert télescopique du corps principal, et pour être assujetti mécaniquement et électriquement au haut ou au bas d'un rail d'alimentation en fonction de son orientation, et au moins un premier organe d'assujettissement d'un troisième type, différent de celui du premier type, configuré pour être monté à la première extrémité du corps principal et pour être assujetti mécaniquement et électriquement au bas du rail roulant.

Dans l'ensemble selon l'invention, le dispositif d'interconnexion électrique est fourni avec différents organes d'assujettissement, dont au moins un premier organe d'assujettissement d'un premier type et au moins un autre d'un troisième type, grâce à quoi il est possible de sélectionné le premier organe d'assujettissement en fonction de son positionnement au haut ou au bas du rail roulant ; tandis que le deuxième organe d'assujettissement peut quant à lui être orienté selon le besoin de positionnement au haut ou au bas du rail d'alimentation.

L'invention a encore pour objet, selon un sixième aspect, un procédé d'interconnexion électrique et de mise à la terre d'au moins un rail ferroviaire roulant avec un rail ferroviaire d'alimentation, à l'aide d'un dispositif d'interconnexion électrique tel que décrit ci-dessus, comportant les étapes de fournir un tel dispositif d'interconnexion électrique et de le disposer entre le rail roulant et le rail d'alimentation, de mettre en position un premier organe d'assujettissement du dispositif d'interconnexion électrique sur le rail roulant, de mettre en position le deuxième organe d'assujettissement sur le rail d'alimentation, d'actionner un mécanisme de serrage du dispositif d'interconnexion électrique pour écarter les premier et deuxième organes d'assujettissement et les mettre en prise sur les rails roulant et d'alimentation respectifs, de monter et verrouiller un organe de blocage sur le mécanisme de serrage de sorte à immobiliser le dispositif d'interconnexion électrique dans une configuration prédéterminée dans laquelle les premier et deuxième organes d'assujettissement sont configurés pour interconnecter électriquement les rails roulant et d'alimentation pour leur mise à la terre.

Le procédé peut comporter l'étape de sélectionner un premier organe d'assujettissement parmi l'un d'un premier type configuré pour être monté à une extrémité du corps principal et pour être assujetti mécaniquement et électriquement au haut du rail roulant, et d'un troisième type, différent de celui du premiertype, configuré pour être monté à la première extrémité du corps principal et pour être assujetti mécaniquement et électriquement au bas du rail roulant.

L'invention a ainsi pour objet, selon un septième aspect, un dispositif d'interconnexion électrique pour mise à la terre de rails ferroviaires, comportant un corps principal, au moins un premier organe d'assujettissement monté à une première extrémité du corps principal et configuré pour être assujetti mécaniquement et électriquement à un rail ferroviaire dit roulant, et au moins un deuxième organe d'assujettissement monté à une deuxième extrémité du corps principal opposée à la première extrémité et configuré pour être assujetti mécaniquement et électriquement à un rail ferroviaire dit d'alimentation, caractérisé en ce le rail roulant est pourvu d'une base, d'une paroi principale s'étendant sensiblement verticalement depuis la base, et d'une tête reliée à la paroi principale à l'opposé de la base et qui est prévue pour former un guide de roulage pour un véhicule ferroviaire, avec la base qui présente, en section, une forme globalement triangulaire présentant une face plane inférieure, deux bords s'étendant depuis la face plane inférieure, et deux faces supérieures inclinées et/ou incurvées s'étendant chacune depuis un bord respectif et dirigées chacune vers le haut et vers la paroi principale, et en ce que ledit au moins un premier organe d'assujettissement est monté mobile en rotation sur le corps principal et est pourvu d'une paroi principale inclinée et/ou incurvée ayant une face externe configurée pour former essentiellement une face de contact pour venir en appui et au contact sur une des faces supérieures inclinées de la base du rail roulant et aussi partiellement sur la paroi principale à proximité immédiate de la face supérieure inclinée de la base du rail roulant lorsque le premier organe de positionnement est en prise sur le rail roulant.

Dans le dispositif d'interconnexion électrique selon l'invention, le premier organe d'assujettissement est assujetti mécaniquement et connecté électriquement sur la base du rail roulant, plutôt que sur la tête du rail roulant, laquelle base est généralement posée au sol ou sur un support lui-même posé au sol. Ceci permet de laisser libre la tête du rail roulant pour l'éventuel passage d'un véhicule ferroviaire, et ce malgré la présence du dispositif d'interconnexion électrique.

Au surplus, ce premier organe d'assujettissement présente une forme qui permet de ne venir en appui que sur un côté seulement de la base du rail roulant. Ceci permet de ne pas avoir à passer sous la base du rail roulant qui, comme indiqué ci-dessus, est posée au sol ou sur un support lui-même posé au sol.

Pour cela, le premier organe d'assujettissement présente une forme qui épouse sensiblement la forme de la face supérieure inclinée du rail roulant, depuis son bord droit et ce jusqu'à sa paroi principale, dont une portion de cette paroi principale. Ceci permet d'assurer à la fois un assujettissement mécanique suffisant et un contact électrique suffisant.

Ledit au moins un premier organe d'assujettissement est pourvu de crochets de fixation s'étendant depuis un bord de la paroi principale incurvée et configuré pour venir en prise au moins sur le bord de la base du rail roulant duquel s'étend la face supérieure inclinée sur laquelle la face externe est en appui, lorsque le premier organe de positionnement est en prise sur le rail roulant.

Les crochets de fixation présentent une forme de L ayant une première branche s'étendant depuis le bord et une deuxième branche s'étendant depuis la première branche, et sont orientés de sorte que la deuxième branche de chacun des crochets de fixation s'étend du côté de la face externe, avec la première branche de chaque crochet de fixation qui est en appui sur le bord tandis que la deuxième branche de chaque crochet de fixation est en appui sous la face plane inférieure à proximité immédiate du bord lorsque le premier organe de positionnement est en prise sur le rail roulant.

Le premier organe de positionnement est pourvu d'une pièce de fixation en saillie d'une face interne opposée à sa face externe et par laquelle le premier organe d'assujettissement est monté mobile en rotation sur le corps principal.

Le deuxième organe d'assujettissement peut être formé par une pièce en L, pourvue d'une première branche, d'une deuxième branche s'étendant depuis la première branche et formant ainsi un espace de préhension et de réception délimité par une face interne de contact pour assurer l'interconnexion électrique avec le rail d'alimentation, et d'une pièce de fixation en saillie de la première branche, à l'opposé de la face de contact, par laquelle le deuxième organe d'assujettissement est monté mobile en rotation sur le corps principal.

Le corps principal peut avoir la forme d'un mono-bras pourvu d'un fourreau, d'un insert logé au moins partiellement dans le fourreau, s'étendant vers la deuxième extrémité du corps principal et sur lequel est assujetti le deuxième organe d'assujettissement, et d'un mécanisme de serrage assujetti au fourreau, s'étendant depuis le fourreau vers la première extrémité du corps principal et sur lequel est assujetti le premier organe d'assujettissement, ledit mécanisme de serrage étant configuré pour écarter les premier et deuxième organes d'assujettissement de sorte à les mettre en prise sur les rails roulant et d'alimentation respectifs, et le dispositif d'interconnexion électrique comporte en outre un organe de verrouillage configuré pour être monté et verrouillé sur le mécanisme de serrage ; grâce à quoi le dispositif d'interconnexion électrique est immobilisé dans une configuration prédéterminée dans laquelle les premier et deuxième organes d'assujettissement sont configurés pour interconnecter électriquement les rails roulant et d'alimentation pour leur mise à la terre.

Le fait que le corps principal du dispositif d'interconnexion électrique selon l'invention soit formé d'un mono-bras regroupant l'insert sur lequel est monté le deuxième organe d'assujettissement, le mécanisme de serrage sur lequel est monté le premier organe d'assujettissement, et aussi le fourreau interposé entre l'insert et le mécanisme de serrage, rend particulièrement compact le dispositif d'interconnexion électrique et aussi particulièrement commode son utilisation, dont la mise en position des premier et deuxième organes d'assujettissement sur les rails roulant et d'alimentation respectifs.

Au surplus, le dispositif d'interconnexion électrique selon l'invention permet, grâce au mécanisme de serrage et à l'organe de verrouillage de ce mécanisme, d'une part de sécuriser la mise en position des premier et deuxième organes d'assujettissement sur les rails roulant et d'alimentation respectifs et d'autre part, de sécuriser le maintien en position de ces premier et deuxième organes d'assujettissement. Ainsi, l'interconnexion électrique des rails roulant et d'alimentation est fiabilisée et leur mise à la terre assurée.

Il est en outre particulièrement commode de verrouiller le positionnement des premier et deuxième organes d'assujettissement par une seule action sur le mono-bras du corps principal et en particulier sur son mécanisme de serrage.

Le mécanisme de serrage peut être pourvu d'une vis de manœuvre, d'un organe de guidage partiellement logé dans le fourreau et prévu pour guider la vis de manœuvre, et d'une bague de serrage et de verrouillage montée mobile en rotation sur la vis de manœuvre, entre la première extrémité du corps principal et l'organe de guidage.

Dans la configuration verrouillée du dispositif, la bague de serrage et de verrouillage peut être disposée en appui contre l'organe de guidage et l'organe de verrouillage est monté verrouillé sur la bague de serrage et de verrouillage ensemble avec l'organe de guidage.

L'organe de guidage peut comporter une paroi annulaire en forme de flasque disposé en appui et à l'extérieur du fourreau, et une paroi cylindrique en saillie de la paroi annulaire et logée dans un espace interne ménagé dans le fourreau par emboîtement d'un côté du fourreau, et une pluralité de trous sont formés dans la paroi annulaire ; et la bague de serrage et de verrouillage peut comporter une paroi annulaire ayant un contour externe qui est ici dentelé et qui est prévu pour venir en appui contre la paroi annulaire de l'organe de guidage.

Le contour externe dentelé peut être pourvu de creux pour permettre l'introduction d'une portion de l'organe de verrouillage pour que, lorsqu'un creux du contour externe se trouve en regard d'un trou de la paroi annulaire de l'organe de guidage, la portion de l'organe de verrouillage puisse traverser à la fois un creux du contour externe et un trou respectif en vue d'immobiliser en rotation la bague de serrage et de verrouillage ensemble avec l'organe de guidage.

L'organe de guidage peut comporter une surface interne filetée qui est traversée par la vis de manœuvre, avec une extrémité qui se trouve à l'opposé de la paroi annulaire, et la bague de serrage et de verrouillage peut comporter en outre une paroi cylindrique traversée par la vis de manœuvre et ayant une face interne ménagée de sorte à former un système à double écrous.

La vis de manœuvre peut être partiellement logée dans un espace interne ménagé dans le fourreau et présenter un orifice ménagé à une extrémité dans laquelle est introduite un organe de butée.

Le corps principal peut être pourvu d'au moins un fourreau et d'au moins un insert télescopique monté mobile en translation et en rotation par rapport au fourreau, avec l'un dudit au moins un premier organe d'assujettissement et dudit au moins un deuxième organe d'assujettissement qui est assujetti mécaniquement à une extrémité libre de l'insert télescopique ; grâce à quoi le dispositif d'interconnexion électrique est configuré pour admettre une configuration rétractée dans laquelle l'insert télescopique est introduit dans le fourreau et une configuration déployée dans laquelle l'insert télescopique est au moins partiellement extrait du fourreau, avec l'un dudit au moins un premier organe d'assujettissement et dudit au moins un deuxième organe d'assujettissement qui est configuré pour être disposé dans une orientation prédéterminée parmi une pluralité d'orientations, quel que soit la configuration du dispositif d'interconnexion électrique.

Le fait de pouvoir déployer/rétracter l'insert télescopique dans le fourreau permet d'adapter la longueur globale du dispositif d'interconnexion électrique à la distance séparant le rail d'alimentation du rail roulant sur lesquels ce dispositif d'interconnexion électrique est mis en prise par l'intermédiaire des premier et deuxième organes d'assujettissement, en vue de l'interconnexion électrique de ces rails pour leur mise à la terre.

En effet, grâce à la fonction télescopique de l'insert par rapport au fourreau, il est possible d'adapter la longueur du corps principal à la distance séparant les rails roulant et d'alimentation.

Au surplus, le fait de pouvoir modifier et choisir l'orientation de l'un des premier et deuxième organes d'assujettissement autorise la mise en prise de ce dernier sur le haut ou sur le bas du rail ferroviaire sur lequel il est assujetti. Cela a également un effet sur la longueur globale du dispositif.

En effet, la rotation de l'insert télescopique dans le fourreau entraîne la rotation de l'organe d'assujettissement qui est assujetti à cet insert télescopique. Il est donc possible de retourner cet organe d'assujettissement en fonction de l'endroit où il doit venir en appui et au contact du rail ferroviaire.

Le dispositif d'interconnexion électrique est ainsi particulièrement polyvalent et adaptable en ce qu'il peut être utilisé pour différentes distances d'écartement entre les rails roulant et d'alimentation et quel que soit l'endroit sur le rail où l'organe d'assujettissement monté sur l'insert doit se mettre en prise.

Le dispositif peut être pourvu d'orifices de positionnement ménagés à la fois dans le fourreau et dans l'insert télescopique, ainsi qu'un organe de fixation monté dans les orifices de positionnement du fourreau et de l'insert télescopique lorsqu'ils sont en regard l'un de l'autre ; grâce à quoi l'insert télescopique peut être maintenu dans une pluralité de positions distinctes par rapport au fourreau.

Le deuxième organe d'assujettissement peut être monté mobile en rotation sur une extrémité libre de l'insert télescopique ; et/ou le premier organe d'assujettissement peut être monté mobile en rotation sur une extrémité libre de la vis de manœuvre.

Le dispositif peut comporter une poignée de préhension formée d'un manche assujetti mécaniquement via une liaison pivot sur un manchon, lequel est monté serré sur le corps principal.

L'invention a aussi pour objet, selon un huitième aspect, un ensemble comportant un dispositif d'interconnexion électrique tel que décrit ci-dessus ainsi qu'un ou plusieurs accessoires, dont au moins un premier organe d'assujettissement d'un premier type configuré pour être monté à une première extrémité d'un corps principal du dispositif d'interconnexion électrique et pour être assujetti mécaniquement et électriquement au haut d'un rail roulant, au moins un deuxième organe d'assujettissement d'un deuxième type configuré pour être monté à une deuxième extrémité du corps principal opposé à sa première extrémité, sur un insert télescopique du corps principal, et pour être assujetti mécaniquement et électriquement au haut ou au bas d'un rail d'alimentation en fonction de son orientation, et au moins un premier organe d'assujettissement d'un troisième type, différent de celui du premier type, configuré pour être monté à la première extrémité du corps principal et pour être assujetti mécaniquement et électriquement au bas du rail roulant.

Dans l'ensemble selon l'invention, le dispositif d'interconnexion électrique est fourni avec différents organes d'assujettissement, dont au moins un premier organe d'assujettissement d'un premier type et au moins un autre d'un troisième type, grâce à quoi il est possible de sélectionné le premier organe d'assujettissement en fonction de son positionnement au haut ou au bas du rail roulant ; tandis que le deuxième organe d'assujettissement peut quant à lui être orienté selon le besoin de positionnement au haut ou au bas du rail d'alimentation.

L'invention a encore pour objet, selon un neuvième aspect, un procédé d'interconnexion électrique et de mise à la terre d'au moins un rail ferroviaire roulant avec un rail ferroviaire d'alimentation à l'aide d'un dispositif d'interconnexion électrique tel que décrit ci-dessus, comportant les étapes de fournir un tel dispositif d'interconnexion électrique et de le disposer entre le rail roulant et le rail d'alimentation, de mettre en prise un premier organe d'assujettissement du dispositif d'interconnexion électrique sur le rail roulant, avec le rail roulant qui est pourvu d'une base, d'une paroi principale s'étendant sensiblement verticalement depuis la base, et d'une tête reliée à la paroi principale à l'opposé de la base et qui est prévue pour former un guide de roulage pour un véhicule ferroviaire, la base présentant, en section, une forme globalement triangulaire présentant une face plane inférieure, deux bords s'étendant depuis la face plane inférieure, et deux faces supérieures inclinées et/ou incurvées s'étendant chacune depuis un bord respectif et dirigées chacune vers le haut et vers la paroi principale, et avec ledit au moins un premier organe d'assujettissement qui est monté mobile en rotation sur le corps principal et qui est pourvu d'une paroi principale inclinée et/ou incurvée ayant une face externe configurée pour former essentiellement une face de contact pour venir en appui et au contact sur une des faces supérieures inclinées de la base du rail roulant et aussi partiellement sur la paroi principale à proximité immédiate de la face supérieure inclinée de la base du rail roulant lorsque le premier organe de positionnement est en prise sur le rail roulant.

Le procédé peut comporter les étapes de mettre en position le deuxième organe d'assujettissement sur le rail d'alimentation, d'actionner un mécanisme de serrage du dispositif d'interconnexion électrique pour écarter les premier et deuxième organes d'assujettissement et les mettre en prise sur les rails roulant et d'alimentation respectifs, de monter et verrouiller un organe de blocage sur le mécanisme de serrage de sorte à immobiliser le dispositif d'interconnexion électrique dans une configuration prédéterminée dans laquelle les premier et deuxième organes d'assujettissement sont configurés pour interconnecter électriquement les rails roulant et d'alimentation pour leur mise à la terre.

Le procédé peut comporter les étapes d'adapter la longueur du dispositif d'interconnexion électrique en déployant ou en rétractant un insert télescopique du ou dans un fourreau d'un corps principal du dispositif d'interconnexion électrique, d'adapter l'orientation d'un deuxième organe d'assujettissement du dispositif d'interconnexion électrique en tournant l'insert télescopique dans et par rapport au fourreau, avant de mettre en prise le deuxième organe d'assujettissement sur le rail d'alimentation.

L'invention a encore pour objet, selon un dixième aspect, un procédé d'interconnexion électrique et de mise à la terre d'au moins un rail ferroviaire roulant avec un rail ferroviaire d'alimentation, à l'aide d'un dispositif d'interconnexion électrique tel que décrit ci-dessus, comportant les étapes de fournir un tel dispositif d'interconnexion électrique et de le disposer entre le rail roulant et le rail d'alimentation, de mettre en prise un premier organe d'assujettissement du dispositif d'interconnexion électrique sur le rail roulant, d'adapter la longueur du dispositif d'interconnexion électrique en déployant ou en rétractant un insert télescopique du ou dans un fourreau d'un corps principal du dispositif d'interconnexion électrique, d'adapter l'orientation d'un deuxième organe d'assujettissement du dispositif d'interconnexion électrique en tournant l'insert télescopique dans et par rapport au fourreau, et de mettre en prise le deuxième organe d'assujettissement sur le rail d'alimentation.

Le procédé peut comporter l'étape de sélectionner un premier organe d'assujettissement parmi l'un d'un premier type configuré pour être monté à une extrémité du corps principal et pour être assujetti mécaniquement et électriquement au haut du rail roulant, et d'un troisième type, différent de celui du premier type, configuré pour être monté à la première extrémité du corps principal et pour être assujetti mécaniquement et électriquement au bas du rail roulant.

### Brève description des figures

On va maintenant poursuivre l'exposé de l'invention par la description d'exemples de réalisation, donnée ci-après à titre illustratif et non limitatif, en référence aux dessins annexés.
La figure 1 représente très schématiquement un dispositif d'interconnexion électrique monté en prise d'un premier côté sur un rail ferroviaire roulant et d'un second côté opposé au premier côté sur un rail ferroviaire d'alimentation pour la mise à la terre de ces rails.
La figure 2 est similaire à la figure 1 sauf qu'elle montre en perspective le dispositif d'interconnexion électrique selon un premier mode de réalisation de l'invention, en prise sur les rails ferroviaires roulant et d'alimentation et dans une configuration rétractée et verrouillée.
La figure 3 montre en vue de dessous le dispositif d'interconnexion électrique de la figure 2, pris isolément.
La figure 4 montre en vue de dessus le dispositif d'interconnexion électrique de la figure 2, pris isolément.
La figure 5 est une vue en coupe médiane et longitudinale du dispositif d'interconnexion électrique de la figure 2, pris isolément.
La figure 6 est une vue en perspective du dispositif d'interconnexion électrique de la figure 2, pris isolément et tourné de 180° par rapport à cette figure 2.
La figure 7 est une vue en coupe médiane et transversale du dispositif d'interconnexion électrique de la figure 2, pris isolément.
La figure 8 est similaire à la figure 2 sauf qu'elle montre une première variante d'utilisation du dispositif d'interconnexion électrique, dans sa configuration rétractée et verrouillée.
La figure 9 est une vue en perspective montrant une deuxième variante d'utilisation du dispositif d'interconnexion électrique illustré sur les figures 2 à 8, en particulier en prise sur le rail ferroviaire roulant et à distance du rail ferroviaire d'alimentation, ici dans une configuration rétractée et non-verrouillée.
La figure 10 est similaire à la figure 9, sauf que le dispositif d'interconnexion électrique est aussi en prise sur le rail ferroviaire d'alimentation, dans une configuration déployée et non-verrouillée.
La figure 11 est similaire à la figure 10, montrant le dispositif d'interconnexion électrique dans une configuration déployée et verrouillée.
La figure 12 est similaire à la figure 9 sauf qu'elle montre une troisième variante d'utilisation du dispositif d'interconnexion électrique, dans sa configuration rétractée et non-verrouillée.
La figure 13 est similaire à la figure 10 sauf qu'elle montre la troisième variante d'utilisation du dispositif d'interconnexion électrique, dans sa configuration déployée et non-verrouillée.
La figure 14 est similaire à la figure 11 sauf qu'elle montre la troisième variante d'utilisation du dispositif d'interconnexion électrique, dans sa configuration déployée et verrouillée.
La figure 15 est une vue en perspective du dispositif d'interconnexion électrique selon un deuxième mode de réalisation, à distance à la fois du rail ferroviaire roulant et du rail ferroviaire d'alimentation, ici dans une configuration rétractée et non-verrouillée.
La figure 16 est similaire à la figure 15 mais tournée de 180°.
La figure 17 montre en perspective isolée un sabot du dispositif d'interconnexion électrique illustré sur les figures 15 et 16.
La figure 18 est similaire à la figure 17, montrant le sabot selon un angle de vue différent.
La figure 19 est une vue en perspective du dispositif d'interconnexion électrique illustré sur les figures 15 et 16, en prise à la fois sur le rail ferroviaire roulant et sur le rail ferroviaire d'alimentation, ici dans une configuration déployée et verrouillée.
La figure 20 est similaire à la figure 17 mais tournée de 180°.

### Description détaillée

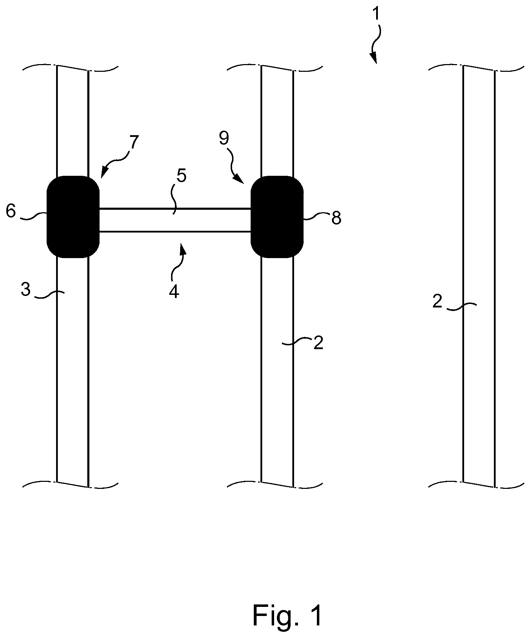

La figure 1 représente très schématiquement une voie ferroviaire électrifiée 1, par exemple du type pour métro, pourvue de deux rails ferroviaires dits roulants 2 et d'un conducteur d'alimentation électrique formé ici par un rail dit d'alimentation 3.

Généralement, les rails roulants 2 et le rail d'alimentation 3 ne sont pas situés au même niveau, c'est-à-dire dans un même plan horizontal.

Par exemple le rail d'alimentation 3 peut être localisé plus haut que les rails roulants 2. En variante, ça peut être l'inverse.

Un dispositif d'interconnexion électrique 4 est ici monté en prise sur un des rails roulants 2 et sur le rail d'alimentation 3.

Le dispositif d'interconnexion électrique 4 est assujetti mécaniquement sur et connecté électriquement avec ces rails 2, 3 de sorte à les interconnecter électriquement en vue de leur mise à la terre.

En particulier, le dispositif d'interconnexion électrique 4 comporte un corps principal 5, un premier organe d'assujettissement mécanique et électrique 6 situé à une première extrémité 7 du corps principal 5 et configuré pour venir en prise sur le rail roulant 2, et un deuxième organe d'assujettissement mécanique et électrique 8 situé à une deuxième extrémité 9 du corps principal 5, opposé à sa première extrémité 7, et configuré pour venir en prise sur le rail d'alimentation 3.

Le corps principal 5 a ici la forme d'un mono-bras.

On notera que l'autre rail roulant 2 peut être interconnecté électriquement avec le rail roulant 2 sur lequel est en prise le dispositif d'interconnexion électrique 4. Par exemple, un câble électrique (non représenté) peut s'étendre depuis le dispositif d'interconnexion électrique 4 du côté du rail roulant 2 sur lequel il est en prise et rejoindre l'autre rail roulant 2, où le câble électrique peut être assujetti mécaniquement et connecté électriquement par l'intermédiaire d'une cosse ou d'une pince.

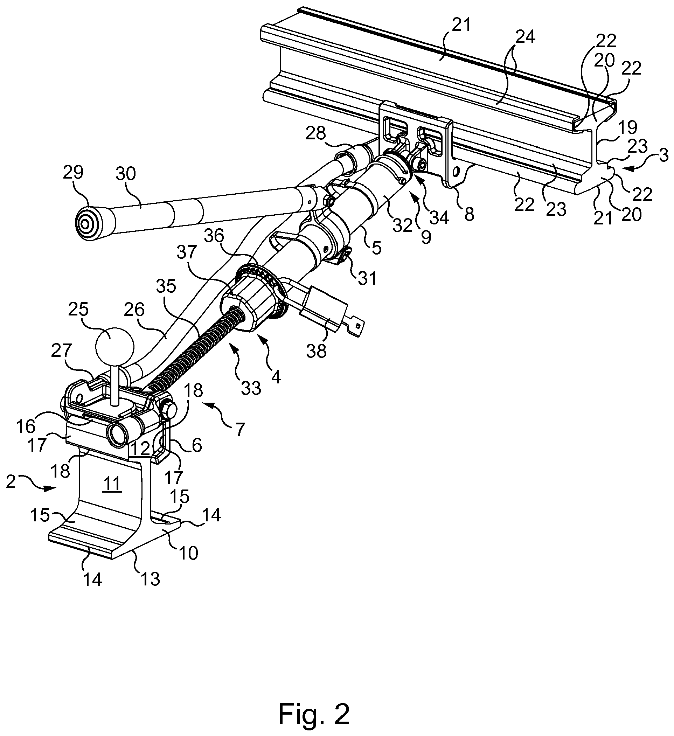

Les figures 2 à 7 montrent en détail le dispositif d'interconnexion électrique 4, selon un premier mode de réalisation.

Sur la figure 2, le dispositif d'interconnexion électrique 4 est monté en prise sur un rail roulant 2 et sur le rail d'alimentation 3.

Le rail roulant 2 a ici sensiblement une forme de T inversé.

En particulier, le rail roulant 2 est pourvu d'une base 10 généralement posée au sol ou sur un support lui-même posé au sol, d'une paroi principale 11 ici sensiblement verticale et s'étendant depuis la base 10, et d'une tête 12 reliée à la paroi principale 11 à l'opposé de la base 10 et qui est prévue pour former un guide de roulage pour un véhicule ferroviaire empruntant la voie ferroviaire.

La base 10 a ici, en section, une forme globalement triangulaire présentant une face plane inférieure 13, deux bords droits 14 s'étendant depuis la face plane inférieure 13, et deux faces supérieures inclinées 15 s'étendant chacune depuis un bord droit 14 respectif et dirigées chacune vers le haut et vers la paroi principale 11.

On notera que les deux faces supérieures inclinées 15 peuvent être légèrement incurvées au moins au niveau de la jonction entre la base 10 et la paroi principale 11, et possiblement aussi plus en amont de chacune de ces faces supérieures inclinées 15.

En variante, les faces supérieures inclinées 15 peuvent présenter plusieurs changements de pentes d'inclinaison depuis le bord droit 15 respectif vers la base 10, la pente à la jonction avec la base 10 étant la plus élevée en terme d'inclinaison.

La tête 12 du rail roulant 2 a la forme d'un bloc ayant une face supérieure 16 sensiblement plane prévue pour recevoir des roues de véhicule ferroviaire, deux faces latérales 17 s'étendant de part et d'autre de la face supérieure 16 et deux portions de jonction 18 qui sont inclinées et qui rejoignent la paroi principale 11.

Le rail d'alimentation 3 a ici sensiblement une forme en I, ou en double U, avec le fond du U commun.

En particulier, le rail d'alimentation 3 est pourvu d'une paroi principale 19 ici sensiblement verticale et de deux pieds 20 reliés chacun à la paroi principale 19 et opposé l'un à l'autre.

Chaque pied 20 a ici, en section, une forme globalement triangulaire présentant une face plane 21, deux bords 22 s'étendant depuis la face plane 21, et deux faces inclinées 23 s'étendant chacune depuis un bord 22 respectif et dirigées chacune vers la paroi principale 19.

Dans l'exemple illustré, les pieds 20 ne sont pas identiques. En particulier, l'un des pieds 20 a des bords 22 et des faces inclinées 23 qui sont sensiblement droits ; tandis que l'autre pied 20 a des bords 22 arrondis et des faces inclinées 23 étagées et comprenant chacune un épaulement.

En variante, les pieds peuvent être identiques ou présenter des formes différentes de celles de l'exemple illustré.

Des pièces d'isolation 24 peuvent être montées sur les pieds 20 du rail d'alimentation 3.

Ici, deux pièces d'isolation 24 sont visibles sur le pied 20 qui est pourvu de bords 22 et de faces inclinées 23 qui sont droits, avec les pièces d'isolation 24 qui recouvrent partiellement la face plane 21, qui recouvrent complètement les bords 22 et qui recouvrent partiellement les faces inclinées 23.

En variante, les pièces d'isolation peuvent recouvrir totalement la face plane et/ou les faces inclinées, voire même la paroi principale.

Comme indiqué en référence à la figure 1, le dispositif d'interconnexion électrique 4 est pourvu du premier organe d'assujettissement mécanique et électrique 6 situé à la première extrémité 7 du corps principal 5 et ici assujetti mécaniquement et connecté électriquement sur la tête 12 du rail roulant 2.

Ce premier organe d'assujettissement mécanique et électrique 6 est ici formé par un sabot d'un premier type, dit ci-après premier sabot et décrit plus en détail plus loin, dont le montage peut être facilité par une poignée de positionnement 25.

Le dispositif d'interconnexion électrique 4 est aussi pourvu du deuxième organe d'assujettissement mécanique et électrique 8 situé à la deuxième extrémité 9 du corps principal 5 et ici assujetti mécaniquement et connecté électriquement sur un pied 20 du rail d'alimentation 3.

Ce deuxième organe d'assujettissement mécanique et électrique 8 est ici formé par un sabot d'un deuxième type, dit ci-après deuxième sabot et décrit plus en détail plus loin, qui est monté mobile et réversible sur le corps principal 5 de sorte à pourvoir être en prise sur l'un ou l'autre des pieds 20 du rail d'alimentation 3.

Dans l'exemple illustré sur la figure 2, le deuxième sabot 8 est en prise sur le pied 20 au bas du rail d'alimentation 3.

Le dispositif d'interconnexion électrique 4 comporte un conducteur électrique 26 formé par un câble de section prédéterminée et assujetti mécaniquement et électriquement à chacun des premier et deuxième sabot 6, 8 par l'intermédiaire respectivement d'une première cosse 27 fixée sur le premier sabot 6 et d'une deuxième cosse 28 fixée sur le deuxième sabot 8.

Le câble 26 court le long du corps principal 5, entre ses première et deuxième extrémités 7, 9.

Le dispositif d'interconnexion électrique 4 comporte une poignée de préhension 29 formée d'un manche 30 assujetti mécaniquement via une liaison pivot sur un manchon 31, lequel est monté serré sur le corps principal 5.

La poignée de préhension 29 est ainsi montée mobile en rotation vis-à-vis du corps principal 5.

Le corps principal 5 du dispositif d'interconnexion électrique 4 est pourvu d'un fourreau 32, d'un mécanisme de serrage 33 assujetti au fourreau 34 et s'étendant vers la première extrémité 7, et d'un insert télescopique 34 logé au moins partiellement dans le fourreau 32 et s'étendant vers la deuxième extrémité 9.

Le premier sabot 6 est monté mobile en rotation sur le mécanisme de serrage 33, tandis que le deuxième sabot est monté mobile en rotation sur l'insert télescopique 34, lequel est sur la figure 2 totalement rétracté dans le fourreau 34.

Le mécanisme de serrage 33 est pourvu d'une tige filetée 35 formant une vis de manœuvre sur laquelle est monté le premier sabot 6, d'un organe de guidage 36 partiellement logé dans le fourreau 32 et prévu pour guider la vis de manoeuvre 35, et d'une bague de serrage et de verrouillage 37 montée mobile en rotation sur la vis de manoeuvre 35, entre la première extrémité 7 et l'organe de guidage 36.

Sur la figure 2, la bague de serrage et de verrouillage 37 est en appui contre l'organe de guidage 36 et le dispositif d'interconnexion électrique 4 comporte un organe de verrouillage, par exemple du type cadenas 38, monté verrouillé sur la bague de serrage et de verrouillage 37 ensemble avec l'organe de guidage 36.

Sur la figure 2, le dispositif d'interconnexion électrique 4 est ainsi montrée en configuration rétractée (c'est-à-dire avec l'insert télescopique 34 non déployée du fourreau 32) et verrouillée (c'est-à-dire avec la bague de serrage et de verrouillage 37 ensemble avec l'organe de guidage 36 immobilisés vis-à-vis du fourreau 32).

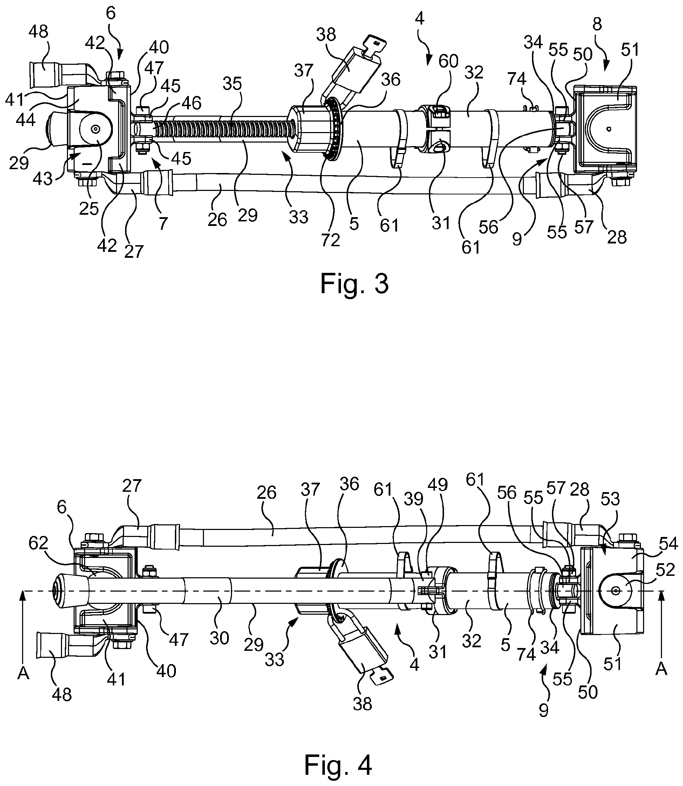

Les figures 3 à 7 montrent le dispositif d'interconnexion électrique 4 pris isolément.

Le premier sabot 6 est formé par une pièce en L avec rebord, pourvue d'une première branche 40, d'une deuxième branche 41 s'étendant depuis la première branche 40, d'un rebord 42 s'étendant depuis la première branche 40 à l'opposé de la deuxième branche 41, formant ainsi un espace de préhension et de réception 43 délimité par une face interne de contact 44 pour assurer l'interconnexion électrique avec le rail roulant 2.

Le rebord 42 est légèrement incliné à l'extérieur de l'espace de préhension et de réception 43.

Le rebord 42 est ici discontinu de sorte qu'il forme deux pattes s'étendant de chaque côté de la première branche 40.

En variante le rebord peut être continu et s'étendre tout le long de la première branche.

En référence à la figure 2, la première branche 40 est ici appuyée serrée contre une des faces latérales 17 de la tête 12 du premier sabot 6, la deuxième branche 41 est posée en appui sur la face supérieure 16 de cette tête 12, et le rebord 42 vient au contact de la portion de jonction 18 de cette tête 12 qui rejoint la face latérale 17 contre laquelle est en appui la première branche 40.

Une partie de la tête 12 du rail roulant 2 se trouve ainsi dans l'espace de préhension et de réception 43 et contre la face interne de contact 44 du premier sabot 6.

En d'autres termes, le premier sabot 6 a une forme qui épouse sensiblement la forme de la tête 12 du rail roulant 2.

La poignée de positionnement 25 est fixée sur la deuxième branche 41 du premier sabot 6, sur une face opposée à la face de contact 44.

Dans l'exemple illustré, une pièce aimantée 62 est montée sur la deuxième branche 51, du côté de la face interne de contact 54.

Cette pièce aimantée 62 est reliée à la poignée de positionnement 25 au travers de la deuxième branche 41 et est ainsi montée fixe dans l'espace de préhension et de réception 43.

Une telle pièce aimantée 62 peut faciliter le maintien du premier 8 contre le rail roulant 2.

Une pièce de fixation 45 saille de la première branche 40, à l'opposé de la face de contact 44, et comporte deux œillets d'accrochage entre lesquels est introduite une extrémité libre 46 de la vis de manœuvre 35.

Un système vis-écrou 47 est assemblé sur la pièce de fixation 45 et sur l'extrémité libre 46 de la vis de manœuvre 35 pour l'assujettir mécaniquement tout en autorisant la rotation du premier sabot 6 vis-à-vis de cette vis de manœuvre 35.

Une troisième cosse 48 est assujettie sur le premier sabot 6 pour permettre l'interconnexion électrique avec l'autre rail roulant 2 (ainsi qu'expliqué en référence à la figure 1).

Le deuxième sabot 8 est formé par une pièce en L et est pourvue d'une première branche 50 et d'une deuxième branche 51 s'étendant depuis la première branche 50 et formant ainsi un espace de préhension et de réception 53 délimité par une face interne de contact 54 pour assurer l'interconnexion électrique avec le rail d'alimentation 3.

En référence à la figure 2, la première branche 50 est ici appuyée serrée contre le bord 22 du pied 20 au bas du rail d'alimentation 3, tandis que la deuxième branche 51 est posée en appui sous la face plane 21 du pied 20 au bas du rail d'alimentation 3.

Une partie du pied 20 au bas du rail d'alimentation 3 se trouve ainsi dans l'espace de préhension et de réception 53 et contre la face interne de contact 54 du deuxième sabot 8.

Dans l'exemple illustré, une pièce aimantée 52 est logée dans un renfoncement ménagé dans la deuxième branche 51, du côté de la face interne de contact 54.

Une telle pièce aimantée 52 peut faciliter le maintien du deuxième sabot 8 contre le rail d'alimentation 3.

Une pièce de fixation 55 saille de la première branche 50, à l'opposé de la face de contact 54, et comporte deux œillets d'accrochage entre lesquels est introduite une extrémité libre 56 de l'insert télescopique 34.

Un système vis-écrou 57 est assemblé sur la pièce de fixation 55 et sur l'extrémité libre 56 de l'insert télescopique 34 pour l'assujettir mécaniquement tout en autorisant la rotation du deuxième sabot 6 vis-à-vis de cet insert télescopique 34.

Le manchon 31 de la poignée de préhension 29 a la forme d'une bague fendue et est monté serré autour du fourreau 32 par l'intermédiaire d'un système de fixation 60 par exemple du type vis-écrou.

Le manche 30 de la poignée de préhension 29 présente une extrémité fendue 39 dans laquelle est introduite une saillie du manchon 30 et un système de fixation 49 par exemple du type vis-écrou pour établir la liaison entre la poignée de préhension 29, aussi appelé levier, et le fourreau 32 du corps principal 5.

Le dispositif d'interconnexion électrique 4 est muni de colliers 61 montés autour du fourreau 32. Ces colliers 61 peuvent par exemple servir à retenir des câbles pour éviter qu'ils ne soient lâches autour du corps principal 5.

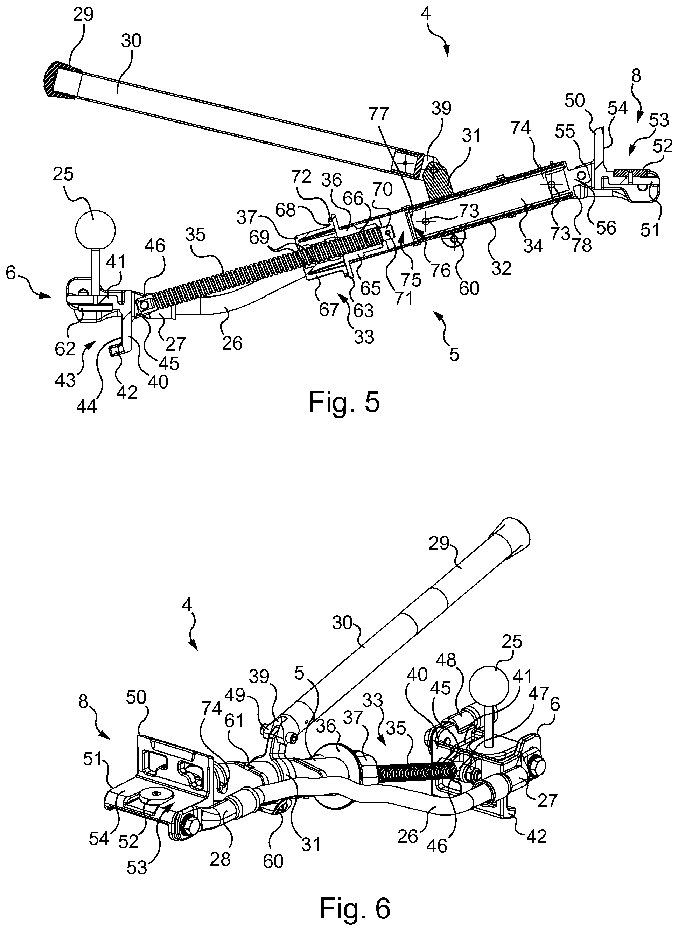

En référence en particulier à la vue en coupe de la figure 5, la vis de manoeuvre 35 du mécanisme de serrage 33 présente un orifice ménagé à une extrémité 70 opposée à son extrémité libre 46, et dans laquelle est introduite un organe de butée, par exemple ici une goupille 71.

L'extrémité 70 de la vis de manoeuvre 35 est logée dans un espace interne 75 ménagé dans le fourreau 32.

L'organe de guidage 36 comporte une paroi annulaire 63 en forme de flasque et une paroi cylindrique 65 en saillie de la paroi annulaire 63 et logée dans l'espace interne 75 par emboîtement dans un côté du fourreau 32.

Une pluralité de trous 64 sont formés dans la paroi annulaire 63 pour recevoir une anse du cadenas 38.

L'organe de guidage 36 comporte une surface interne filetée 66 qui est traversée par la vis de manœuvre 35, avec son extrémité 70 percée qui se trouve à l'opposé de la paroi annulaire 63.

La paroi annulaire 63 est disposée en appui et à l'extérieur du fourreau 32.

La bague de serrage et de verrouillage 37 comporte une paroi annulaire 68 ayant un contour externe 72 qui est ici dentelé et qui est prévu pour venir en appui contre la paroi annulaire 63 de l'organe de guidage 36.

Un tel contour externe 72 dentelé est pourvu de creux suffisamment profonds pour permettre l'introduction de l'anse du cadenas 38 pour que, lorsqu'un creux du contour externe 72 se trouve en regard d'un trou 64 de la paroi annulaire 63 de l'organe de guidage 36, l'anse du cadenas 38 puisse traverser à la fois un creux du contour externe 72 et un trou 64 respectif en vue d'immobiliser en rotation la bague de serrage et de verrouillage 37 ensemble avec l'organe de guidage 36.

La bague de serrage et de verrouillage 37 comporte en outre une paroi cylindrique 67 traversée par la vis de manœuvre 35 et ayant une face interne 69 ménagée de sorte à former ici un système à double écrous.

Le dispositif d'interconnexion électrique 4 est pourvu d'orifices de positionnement 73 ménagés à la fois dans le fourreau 32 et dans l'insert télescopique 34, ainsi qu'un organe de fixation 74 formé par exemple par une goupille et traversant les orifices de positionnement 73 du fourreau 32 et de l'insert télescopique 34 lorsqu'ils sont en regard l'un de l'autre.

Dans l'exemple illustré sont visibles deux paires d'orifices de positionnement 73 de sorte que l'insert télescopique 34 peut être maintenu dans deux positions distinctes par rapport au fourreau 32, à savoir une position rétractée ou une position déployée de l'insert télescopique 34.

Ici, les paires d'orifices de positionnement 73 sont ménagées à la fois sur le fourreau 32 et sur l'insert télescopique 34 de sorte que plus qu'un organe de fixation 74 du type par exemple goupille peut être introduit dans ces orifices de positionnement 73 lorsqu'ils sont en regard, en vue de maintenir l'insert télescopique 34 dans une position prédéterminée par rapport au fourreau 32.

Le fait de pouvoir déployer/rétracter l'insert télescopique 34 dans le fourreau 32 permet d'adapter la longueur globale du dispositif d'interconnexion électrique 4 à la distance séparant le rail d'alimentation 3 du rail roulant 4 sur lesquels ce dispositif d'interconnexion électrique 4 est mis en prise en vue de leur interconnexion électrique pour mise à la terre.

L'insert télescopique 34 peut comporter une section élargie 77 à une extrémité 76 opposée à son extrémité libre 56 et formant une butée interne au fourreau 32.

Le fourreau 32 peut quant à lui comporter du côté opposé où se trouve l'organe de guidage 36, un bord rétréci 78 au niveau duquel saille l'insert télescopique 34.

Ainsi l'insert télescopique 34 peut coulisser dans l'espace interne 75 du fourreau 32 sans pouvoir être totalement extrait du fourreau 32 puisque la section élargie 77 vient en butée contre le bord rétréci 78.

On notera que dans le cas d'espèce, le montage de l'insert télescopique 34 dans le fourreau 32 se fait par le côté du fourreau 32 où se trouve l'organe de guidage 36, la bague de serrage et de verrouillage 37 et la vis de manoeuvre 35, avant le montage de ces derniers.

En plus d'être mobile en translation dans le fourreau 32, l'insert télescopique 34 est mobile en rotation, c'est-à-dire qu'il peut être tourné à l'intérieur du fourreau 32, en particulier pour orienter le deuxième sabot 8 dans une position prédéterminée parmi une pluralité de positions.

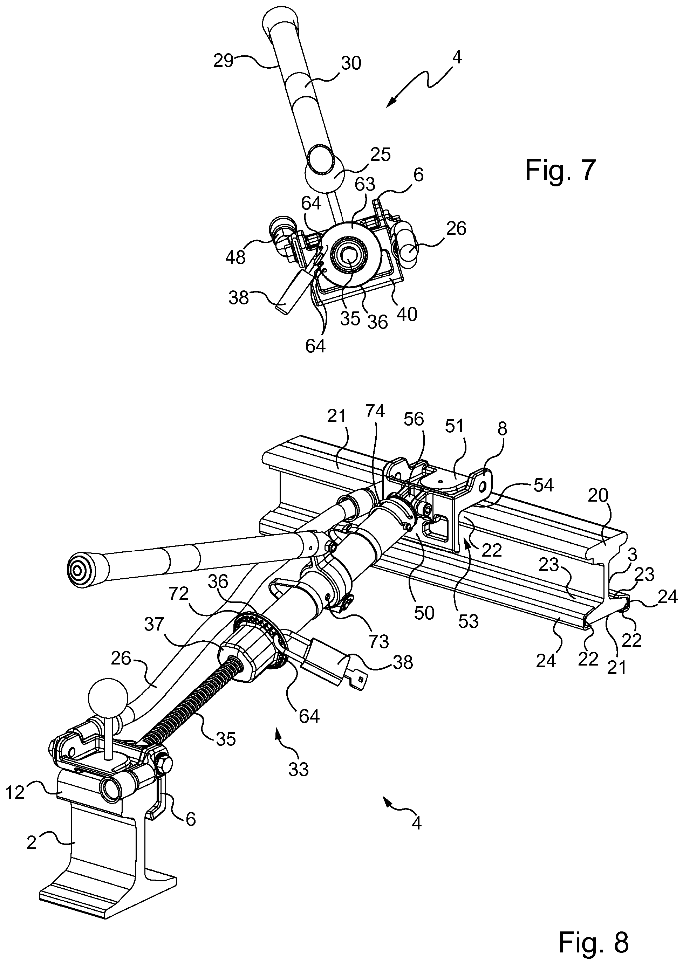

La figure 8 montre une première variante d'utilisation du dispositif d'interconnexion électrique 4, dans laquelle l'insert télescopique 34 a été tourné de 180 degrés à l'intérieur du fourreau 32 de sorte à retourner de 180 degrés le deuxième sabot 8.

Le dispositif d'interconnexion électrique 4 est ici visible en configuration rétractée, avec l'insert télescopique 34 presque complètement introduit dans le fourreau à l'exception de son extrémité libre 56 à laquelle est assujetti le deuxième sabot 8 et verrouillé par l'organe de fixation 74.

Le dispositif d'interconnexion électrique 4 est ici visible aussi en configuration verrouillée avec l'anse du cadenas 38 qui est verrouillée et en prise dans un creux du contour externe dentelé 72 de la bague de serrage et de verrouillage 37 et dans un trou 64 de l'organe de guidage 36.

Le mécanisme de serrage 33 est ainsi bloqué et la vis de manœuvre 35 ne peut pas bouger.

Le premier sabot 6 est assujetti sur la tête 12 du rail roulant 2, comme sur la figure 2 décrit plus haut.

Le deuxième sabot 8 a été tourné de 180 degrés pour lui permettre de venir en appui et au contact du pied 20 au haut du rail d'alimentation 3, plutôt que sur le pied du bas comme sur la figure 2.

Sur cette figure 8, on voit que les pièces d'isolation 24 sont montées sur le pied 20 au bas du rail d'alimentation 3, et recouvrent partiellement la face plane 21, recouvrent complètement les bords 22 et recouvrent partiellement les faces inclinées 23 du pied 20.

La première branche 50 du deuxième sabot 8 est ici appuyée serrée contre le bord 22 du pied 20 au haut du rail d'alimentation 3, tandis que la deuxième branche 51 est posée en appui sur la face plane 21 du pied 20 au haut du rail d'alimentation 3.

Une partie du pied 20 au haut du rail d'alimentation 3 se trouve ainsi dans l'espace de préhension et de réception 53 et contre la face interne de contact 54 du deuxième sabot 8.

Les rails roulant et d'alimentation 2, 3 sont donc ici interconnectés électriquement via la tête 12 du rail roulant 2, le premier sabot 6, le câble électrique 26, le deuxième sabot 8 et le pied 20 au haut du rail d'alimentation 3.

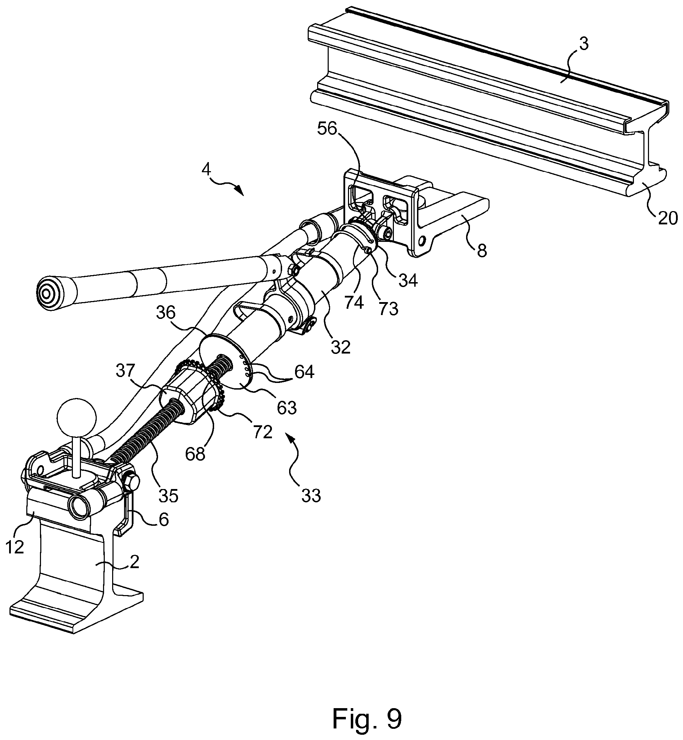

Les figures 9 à 11 montrent une deuxième variante d'utilisation du dispositif d'interconnexion électrique 4, avec le premier sabot 6 en appui et au contact de la tête 12 du rail roulant 2, comme sur les figures 2 et 8 ; et avec le deuxième sabot 8 tourné comme sur la figure 2, c'est-à-dire pour être en appui et au contact du pied 20 au bas du rail d'alimentation 3.

En d'autres termes, l'insert télescopique 34 et le deuxième sabot 8 ont été tournés de 180 degrés par rapport à la figure 8.

Sur la figure 9, le dispositif d'interconnexion électrique 4 est en configuration rétractée et non verrouillée.

En particulier, l'insert télescopique 34 est presque complètement introduit dans le fourreau 32, à l'exception de son extrémité libre 56 à laquelle est assujetti le deuxième sabot 8.

L'organe de fixation 74 est introduit dans les orifices de positionnement 73 les plus éloignés de l'organe de guidage 36.

La bague de serrage et de verrouillage 37 est écartée de l'organe de guidage 36, avec les parois annulaires respectives 68 et 63 qui sont à distance l'une de l'autre, et les trous 64 et le contour externe dentelé 72 qui sont libres.

Dans cette position, la bague de serrage et de verrouillage 37 est déplacée par rotation sur la vis de manœuvre 35 et le mécanisme de serrage 33 n'est pas verrouillé.

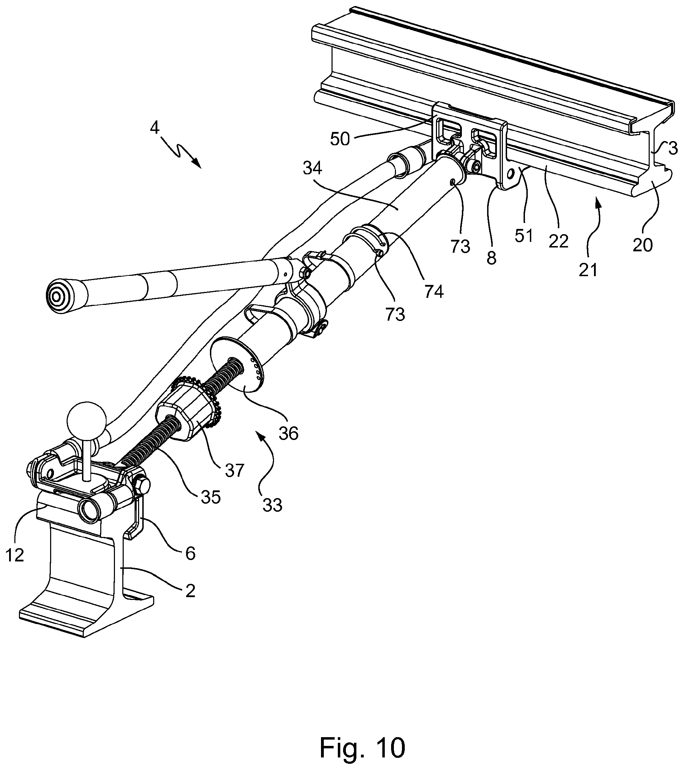

Sur la figure 10, le dispositif d'interconnexion électrique 4 est en configuration déployée et non verrouillée.

En particulier, l'organe de fixation 74 a été retiré des orifices de positionnement 73 les plus éloignés de l'organe de guidage 36, l'insert télescopique 34 est déployé du fourreau 32 et l'organe de fixation 74 est maintenant introduit dans les orifices de positionnement 73 les plus éloignés du deuxième sabot 8.

Le deuxième sabot 8 a sa première branche 50 posée en appui sous la face plane 21 du pied 20 au bas du rail d'alimentation 3 et sa deuxième branche 51 en appui contre le bord 22 du pied 20 au bas du rail d'alimentation 3.

De l'autre côté, la bague de serrage et de verrouillage 37 est toujours écartée de l'organe de guidage 36 et n'a pas été déplacée sur la vis de manoeuvre 35, de sorte que le mécanisme de serrage 33 n'est toujours pas verrouillé.

Le premier sabot 6 est toujours en appui contre la tête 12 du rail roulant 2.

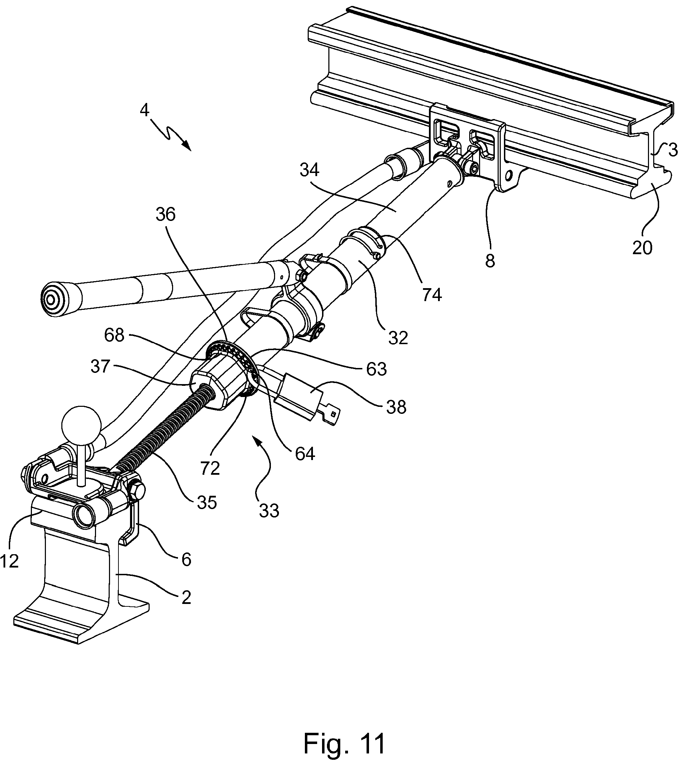

Sur la figure 11, le dispositif d'interconnexion électrique 4 est en configuration déployée et verrouillée.

En particulier, l'insert télescopique 34 est déployé par rapport au fourreau 32 et verrouillé dans sa position grâce à l'organe de fixation 74.

Le deuxième sabot 8 est en appui contre le pied 20 au bas du rail d'alimentation 3.

De l'autre côté, la bague de serrage et de verrouillage 37 a été entrainée en rotation et déplacée le long de la vis de manœuvre 35 jusqu'à ce que sa paroi annulaire 68 vienne en appui contre la paroi annulaire 63 de l'organe de guidage 36.

En serrant la bague de serrage et de verrouillage 37 à l'encontre de l'organe de guidage 36, la vis de manoeuvre 35 est entrainée en translation en direction opposée au fourreau 32 grâce à la face interne 69 de la bague de serrage et de verrouillage 37.

Ainsi à la fois le premier sabot 6 est serré contre le rail roulant 2 et le deuxième sabot 8 est serré contre le rail d'alimentation 3.

La bague de serrage et de verrouillage 37 est manœuvrée de sorte à ce qu'un creux de son contour externe dentelé 72 se trouve en regard d'un trou 64 de l'organe de guidage 36, et l'anse du cadenas 38 y est insérée et est verrouillée.

Le mécanisme de serrage 33 est ainsi bloqué et la vis de manoeuvre 35 ne peut pas bouger.

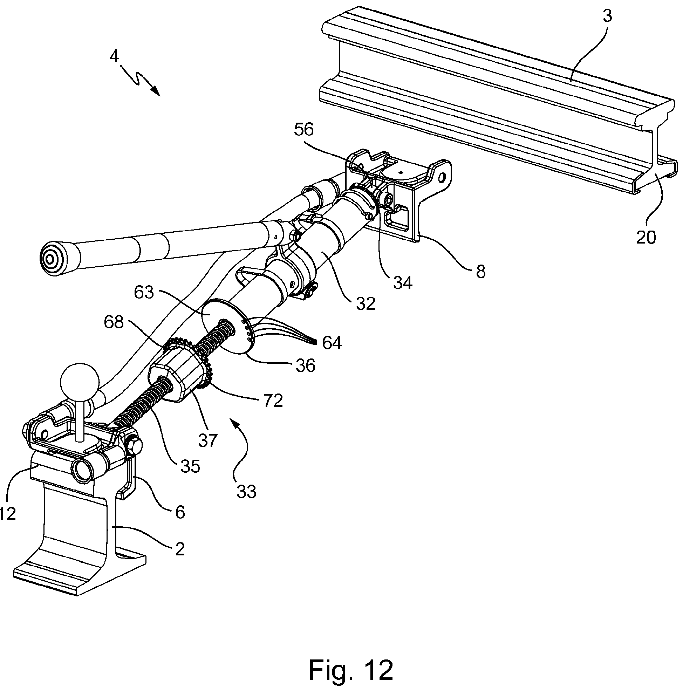

Les figures 12 à 14 montrent une troisième variante d'utilisation du dispositif d'interconnexion électrique 4, avec le premier sabot 6 en appui et au contact de la tête 12 du rail roulant 2, comme sur les figures 2 et 8 à 11 ; et avec le deuxième sabot 8 tourné comme sur la figure 8, c'est-à-dire pour être en appui et au contact du pied 20 au haut du rail d'alimentation 3.

En d'autres termes, l'insert télescopique 34 et le deuxième sabot 8 ont été tournés de 180 degrés par rapport aux figures 9 à 11.

Sur la figure 12, le dispositif d'interconnexion électrique 4 est en configuration rétractée et non verrouillée.

En particulier, l'insert télescopique 34 est presque complètement introduit dans le fourreau 32, à l'exception de son extrémité libre 56 à laquelle est assujettie le deuxième sabot 8.

L'organe de fixation 74 est introduit dans les orifices de positionnement 73 les plus éloignés de l'organe de guidage 36.

La bague de serrage et de verrouillage 37 est écartée de l'organe de guidage 36, avec les parois annulaires respectives 68 et 63 qui sont à distance l'une de l'autre, et les trous 64 et le contour externe dentelé 72 qui sont libres.

Dans cette position, la bague de serrage et de verrouillage 37 est déplacée par rotation sur la vis de manœuvre 35 et le mécanisme de serrage 33 n'est pas verrouillé.

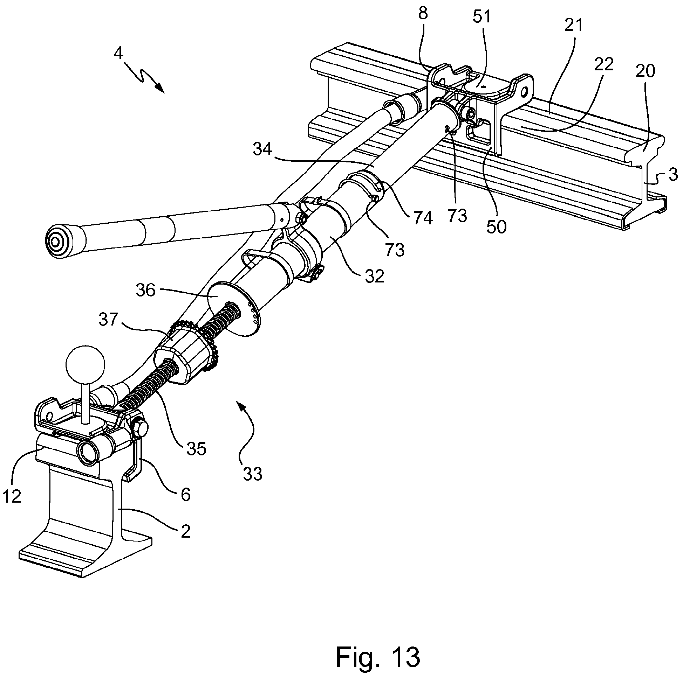

Sur la figure 13, le dispositif d'interconnexion électrique 4 est en configuration déployée et non verrouillée.

En particulier, l'organe de fixation 74 a été retiré des orifices de positionnement 73 les plus éloignés de l'organe de guidage 36, l'insert télescopique 34 est déployé du fourreau 32 et l'organe de fixation 74 est maintenant introduit dans les orifices de positionnement 73 les plus éloignés du deuxième sabot 8.

Le deuxième sabot 8 a sa première branche 50 posée en appui sous la face plane 21 du pied 20 au haut du rail d'alimentation 3 et sa deuxième branche 51 en appui contre le bord 22 du pied 20 au haut du rail d'alimentation 3.

De l'autre côté, la bague de serrage et de verrouillage 37 est toujours écartée de l'organe de guidage 36 et n'a pas été déplacée sur la vis de manœuvre 35, de sorte que le mécanisme de serrage 33 n'est toujours pas verrouillé.

Le premier sabot 6 est toujours en appui contre la tête 12 du rail roulant 2.

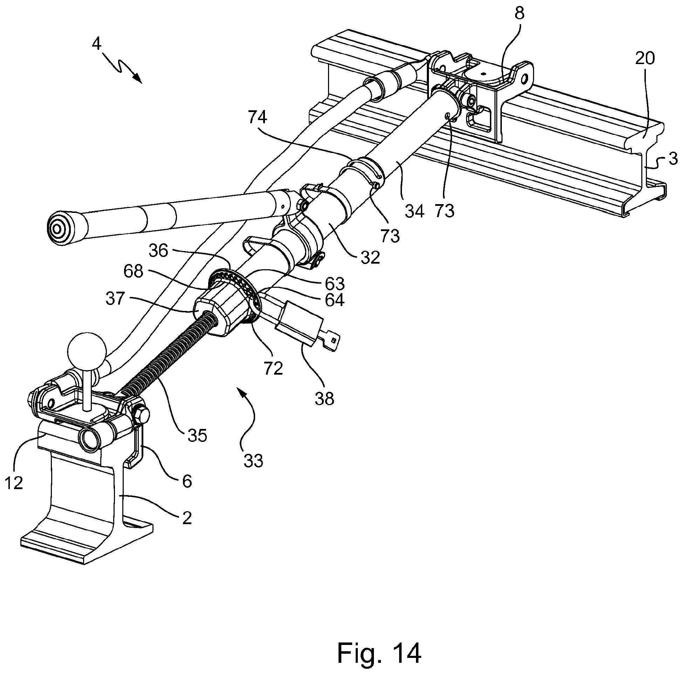

Sur la figure 14, le dispositif d'interconnexion électrique 4 est en configuration déployée et verrouillée.

En particulier, l'insert télescopique 34 est déployé par rapport au fourreau 32 et verrouillé dans sa position grâce à l'organe de fixation 74.

Le deuxième sabot 8 est en appui contre le pied 20 au haut du rail d'alimentation 3.

De l'autre côté, la bague de serrage et de verrouillage 37 a été entrainée en rotation et déplacée le long de la vis de manœuvre 35 jusqu'à ce que sa paroi annulaire 68 vienne en appui contre la paroi annulaire 63 de l'organe de guidage 36.

En serrant la bague de serrage et de verrouillage 37 à l'encontre de l'organe de guidage 36, la vis de manœuvre 35 est entrainée en translation en direction opposée au fourreau 32 grâce à la face interne 69 de la bague de serrage et de verrouillage 37.

Ainsi à la fois le premier sabot 6 est serré contre le rail roulant 2 et le deuxième sabot 8 est serré contre le rail d'alimentation 3.

La bague de serrage et de verrouillage 37 est manœuvrée de sorte à ce qu'un creux de son contour externe dentelé 72 se trouve en regard d'un trou 64 de l'organe de guidage 36, et l'anse du cadenas 38 y est insérée et est verrouillée.

Le mécanisme de serrage 33 est ainsi bloqué et la vis de manœuvre 35 ne peut pas bouger.

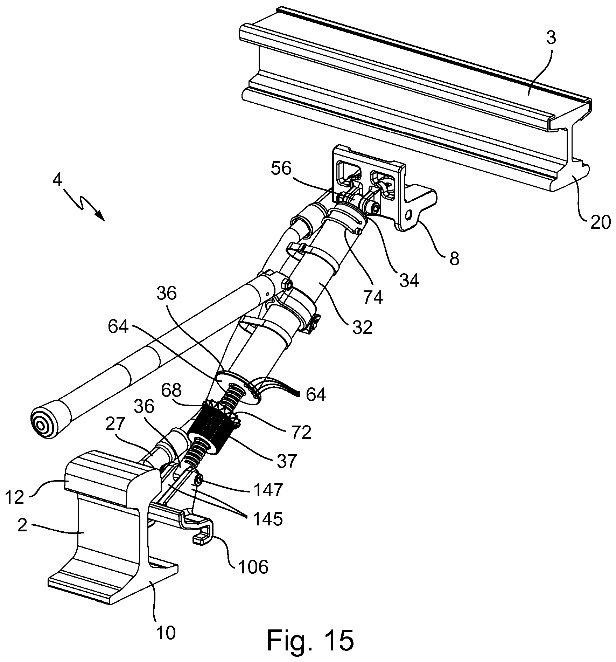

Les figures 15 à 20 montrent le dispositif d'interconnexion électrique selon un deuxième mode de réalisation. Pour simplifier la description, les mêmes références numériques ont été utilisées sauf pour le premier sabot qui diffère de celui illustré et décrit en référence aux précédentes figures, et donc pour lequel des références similaires mais additionnées du nombre 100 ont été utilisées.

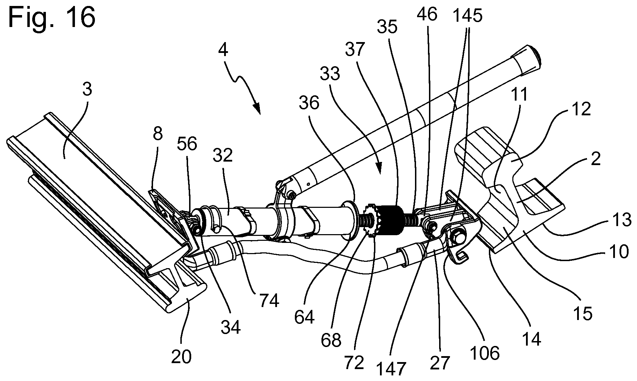

Sur les figures 15 et 16, puis 19 et 20, le dispositif d'interconnexion électrique 4 est illustré respectivement en configuration rétractée et non verrouillée, sensiblement comme sur la figure 9, puis en configuration déployée et verrouillée, sensiblement comme sur la figure 11.

Le dispositif d'interconnexion électrique 4 est pourvu d'un premier sabot 106 d'un troisième type, formant un premier organe d'assujettissement mécanique et électrique configuré pour être assujetti mécaniquement et connecté électriquement sur la base 10 du rail roulant 2, plutôt que sur la tête 12 du rail roulant 2.

Ce premier sabot 106 est assujetti mécaniquement à la vis de manœuvre 35 par son extrémité libre 46.

En particulier, le premier sabot 106 est pourvu d'une pièce de fixation 145 munie des deux œillets d'accrochage entre lesquels est introduite l'extrémité libre 46 de la vis de manœuvre 35.

Un système vis-écrou 147 est assemblé sur la pièce de fixation 145 et sur l'extrémité libre 146 de la vis de manœuvre 35 pour l'assujettir mécaniquement tout en autorisant la rotation du premier sabot 106 vis-à-vis de cette vis de manoeuvre 135.

Ce premier sabot 106 (décrit plus en détail ci-après) présente une forme qui va permettre de le mettre en appui et au contact essentiellement d'une des faces supérieures inclinées 15.

Ce premier sabot 106 est prévu pour être en appui et au contact également du bord droit 14 depuis lequel s'étend la face supérieure partiellement inclinée 15, partiellement sur la face plane inférieure 13, à proximité immédiate du bord droit 14, et aussi partiellement sur la paroi principale 11 à proximité immédiate de la face supérieure partiellement inclinée 15.

Le deuxième sabot 8 du dispositif d'interconnexion électrique 4 est identique à celui décrit plus haut en référence aux figures 2 à 14.

Ce deuxième sabot 8 est ici orienté de sorte à être configuré pour venir en appui et au contact du pied 20 au bas du rail d'alimentation 3, comme sur les figures 2 à 7 et 9 à 11.

En d'autres termes, l'insert télescopique 34 et le deuxième sabot 8 ont été tournés de 180 degrés par rapport à la figure 8 et aussi par rapport aux figures 12 à 14.

En particulier, sur les figures 15 et 16, l'insert télescopique 34 est presque complètement introduit dans le fourreau 32, à l'exception de son extrémité libre 56 à laquelle est assujettie le deuxième sabot 8.

L'organe de fixation 74 est introduit dans les orifices de positionnement 73 les plus éloignés de l'organe de guidage 36.

La bague de serrage et de verrouillage 37 est écartée de l'organe de guidage 36, avec les parois annulaires respectives 68 et 63 qui sont à distance l'une de l'autre, et les trous 64 et le contour externe dentelé 72 qui sont libres.

Dans cette position, la bague de serrage et de verrouillage 37 est déplacée par rotation sur la vis de manoeuvre 35 et le mécanisme de serrage 33 n'est pas verrouillé.

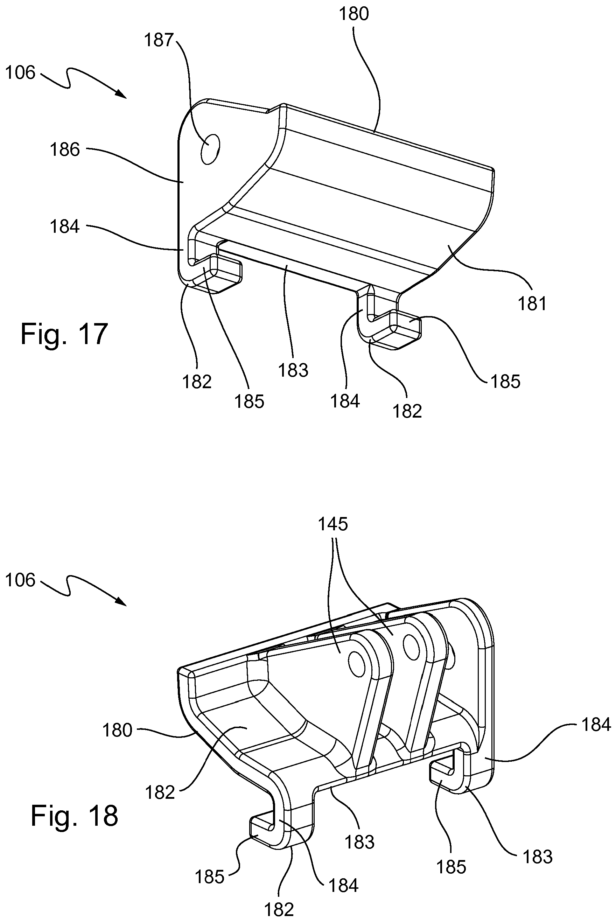

On va maintenant décrire plus en détail le premier sabot 106 en référence aux figures 17 et 18.

Le premier sabot 106 est pourvu d'une paroi principale inclinée et/ou incurvée 180 ayant une face externe 181 configurée pour former essentiellement une face de contact pour venir en appui et au contact du rail roulant, et une face interne 182 opposée à la face externe 181 et de laquelle saille la pièce de fixation 145 munie des deux œillets d'accrochage qui sont percés chacun d'un orifice.

Le premier sabot 106 est pourvu ici de crochets de fixation 182 s'étendant depuis un bord 183 de la paroi principale inclinée et/ou incurvée 180.

Ces crochets de fixation 182 présentent une forme de L ayant une première branche 184 s'étendant depuis le bord 183 et une deuxième branche 185 s'étendant depuis la première branche 184.

Les crochets de fixation 182 sont orientés de sorte que la deuxième branche 185 de chacun de ces crochets de fixation 182 s'étend du côté de la face externe 181.

Le premier sabot 106 est pourvu en outre d'une paroi latérale 186 s'étendant d'un côté du premier sabot 106, à l'opposé d'un des crochets de fixation 182 et en regard d'un des œillets d'accrochage de la pièce de fixation 145.

Cette paroi latérale 186 est percée d'un orifice 187 pour la fixation de la cosse 27.

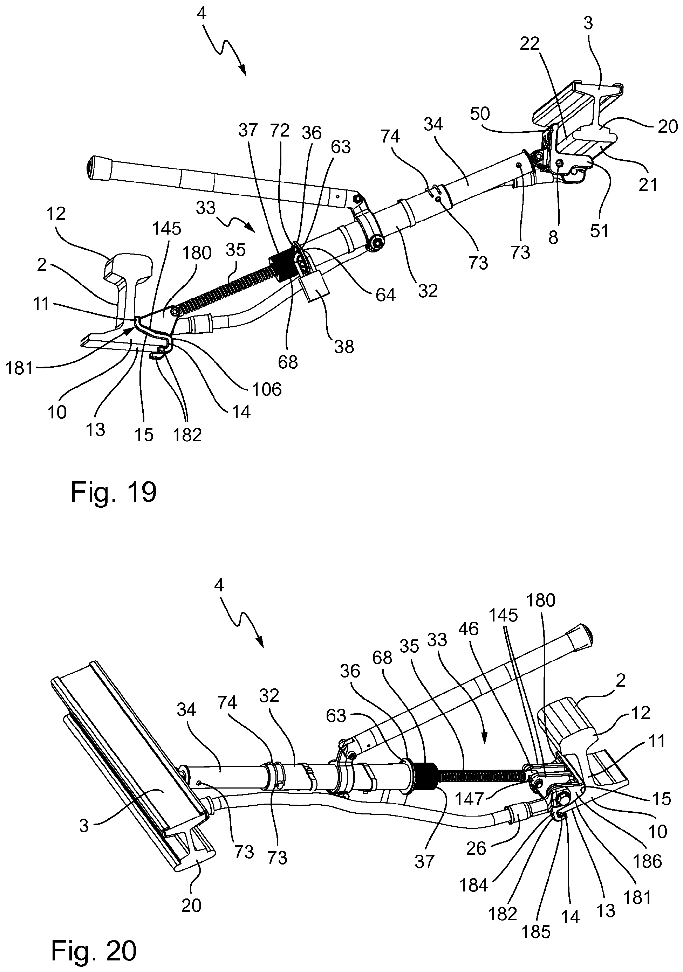

Sur les figures 19 et 20, l'organe de fixation 74 a été retiré des orifices de positionnement 73 les plus éloignés de l'organe de guidage 36, l'insert télescopique 34 est déployé du fourreau 32 et l'organe de fixation 74 est maintenant introduit dans les orifices de positionnement 73 les plus éloignés du deuxième sabot 8.

Le deuxième sabot 8 a sa première branche 50 posée en appui sous la face plane 21 du pied 20 au bas du rail d'alimentation 3 et sa deuxième branche 51 en appui contre le bord 22 du pied 20 au bas du rail d'alimentation 3.

De l'autre côté, la bague de serrage et de verrouillage 37 a été entrainée en rotation et déplacée le long de la vis de manoeuvre 35 jusqu'à ce que sa paroi annulaire 68 vienne en appui contre la paroi annulaire 63 de l'organe de guidage 36.

En serrant la bague de serrage et de verrouillage 37 à l'encontre de l'organe de guidage 36, la vis de manœuvre 35 est entrainée en translation en direction opposée au fourreau 32 grâce à la face interne 69 de la bague de serrage et de verrouillage 37.

Ainsi à la fois le premier sabot 106 est serré contre le rail roulant 2 et le deuxième sabot 8 est serré contre le rail d'alimentation 3.

La bague de serrage et de verrouillage 37 est manœuvrée de sorte à ce qu'un creux de son contour externe dentelé 72 se trouve en regard d'un trou 64 de l'organe de guidage 36, et l'anse du cadenas 38 y est insérée et est verrouillée.

Le mécanisme de serrage 33 est ainsi bloqué et la vis de manœuvre 35 ne peut pas bouger.

Le premier sabot 106 a la face externe de sa paroi principale inclinée et/ou incurvée 180 au contact et en appui sur une des faces supérieures inclinées 15 de la base 10 du rail roulant 2 et aussi partiellement sur la paroi principale 11 à proximité immédiate de la face supérieure partiellement inclinée 15.

La forme de la paroi principale inclinée et/ou incurvée 180 du premier sabot 106 épouse sensiblement la forme de la face supérieure inclinée 15 du rail roulant 2, depuis le bord droit 14 jusqu'à la paroi principale 11, dont une portion de cette paroi principale 11.

Le premier sabot 106 a en outre ses crochets de fixation 182 qui sont en prise sur le bord droit 14 depuis lequel s'étend la face supérieure partiellement inclinée 15 sur laquelle est en appui la paroi principale inclinée et/ou incurvée 180, et partiellement sous la face plane inférieure 13, à proximité immédiate du bord droit 14.

En particulier, la première branche 184 de chaque crochet de fixation 182 est en appui sur le bord droit 14 tandis que la deuxième branche 185 de chaque crochet de fixation 182 est en appui sous la face plane inférieure 13.

Le dispositif d'interconnexion électrique 4 présente donc l'avantage d'être télescopique, et/ou de disposer d'un deuxième sabot dont l'orientation est réversible pour sa mise en prise sur le rail d'alimentation, et/ou de disposer d'un mono-bras pourvu d'un mécanisme de serrage verrouillable, et/ou de disposer d'un premier sabot sélectionnable entre un sabot qui épouse sensiblement la forme de la tête du rail roulant et un sabot qui épouse sensiblement la forme de la base du rail roulant.

Des variantes non illustrées sont décrites ci-dessous.

Le dispositif peut être dépourvu d'un organe de verrouillage.

Le dispositif peut comporter plusieurs câblettes reliant les sabots.

Le dispositif peut comporter un corps principal en forme de cadre ayant deux bras plutôt qu'un mono-bras et, le cas échéant, le cadre multi-bras peut être télescopique et/ou le dispositif peut être pourvu d'un premier sabot réversible du premier type comme celui décrit plus haut et/ou d'un deuxième sabot du deuxième type ou du troisième type comme ceux décrits plus haut, à savoir soit qui épouse sensiblement la forme de la tête du rail roulant, soit qui épouse sensiblement la forme de la base du rail roulant.

Le premier et/ou le deuxième sabot peuvent être dépourvus de pièce aimantée.

La bague de serrage et de verrouillage peut être pourvue d'une pluralité d'orifice sur sa paroi annulaire plutôt qu'un contour externe dentelé.

L'insert télescopique peut comporter une pluralité d'orifices de positionnement définissant une pluralité de positions déployées par rapport au fourreau.

C'est le premier sabot plutôt que le deuxième sabot qui est assujetti sur l'insert télescopique.

Le fourreau peut ne comporter qu'une paire d'orifices de positionnement à l'endroit de l'insertion de l'organe de fixation.

On rappelle plus généralement que l'invention ne se limite pas aux exemples décrits et représentés mais que l'invention est définie par les revendications suivantes.

## Revendications

1. Dispositif d'interconnexion électrique pour mise à la terre de rails ferroviaires, comportant un corps principal (5), au moins un premier organe d'assujettissement (6, 106) monté à une première extrémité (7) du corps principal (5) et configuré pour être assujetti mécaniquement et électriquement à un rail ferroviaire dit roulant (2), au moins un deuxième organe d'assujettissement (8) monté à une deuxième extrémité (9) du corps principal (5) opposée à la première extrémité (7) et configuré pour être assujetti mécaniquement et électriquement à un rail ferroviaire dit d'alimentation (3), dans lequel le corps principal (5) est pourvu d'au moins un fourreau (32) et d'au moins un insert télescopique (34) monté mobile en translation et en rotation par rapport au fourreau (32), avec l'un dudit au moins un premier organe d'assujettissement (6, 106) et dudit au moins un deuxième organe d'assujettissement (8) qui est assujetti mécaniquement à une extrémité libre (56) de l'insert télescopique (34) ; grâce à quoi le dispositif d'interconnexion électrique (4) est configuré pour admettre une configuration rétractée dans laquelle l'insert télescopique (34) est introduit dans le fourreau (32) et une configuration déployée dans laquelle l'insert télescopique (34) est au moins partiellement extrait du fourreau (32), **caractérisé en ce que** l'un dudit au moins un premier organe d'assujettissement (6, 106) et dudit au moins un deuxième organe d'assujettissement (8) est configuré pour être disposé dans une orientation prédéterminée parmi une pluralité d'orientations, quel que soit la configuration du dispositif d'interconnexion électrique (4).

2. Dispositif selon la revendication 1, **caractérisé en ce qu'**il est pourvu d'orifices de positionnement (73) ménagés à la fois dans le fourreau (32) et dans l'insert télescopique (34), ainsi qu'un organe de fixation (74) monté dans les orifices de positionnement (73) du fourreau (32) et de l'insert télescopique (34) lorsqu'ils sont en regard l'un de l'autre ; grâce à quoi l'insert télescopique (34) peut être maintenu dans une pluralité de positions distinctes par rapport au fourreau (32).

3. Dispositif selon l'une des revendications 1 et 2, **caractérisé en ce que** le corps principal (5) comporte un mécanisme de serrage (33) assujetti au fourreau (34) s'étendant vers la première extrémité (7) du corps principal (5), et le premier organe d'assujettissement (6, 106) est monté sur le mécanisme de serrage (33).

4. Dispositif selon la revendication 3, **caractérisé en ce que** le mécanisme de serrage (33) est pourvu d'une vis de manœuvre (35), d'un organe de guidage (36) partiellement logé dans le fourreau (32) et prévu pour guider la vis de manœuvre (35), et d'une bague de serrage et de verrouillage (37) montée mobile en rotation sur la vis de manœuvre (35), entre la première extrémité (7) du corps principal (5) et l'organe de guidage (36).

5. Dispositif selon la revendication 4, **caractérisé en ce que** dans une configuration verrouillée du dispositif, la bague de serrage et de verrouillage (37) est disposée en appui contre l'organe de guidage (36) et le dispositif d'interconnexion électrique (4) comporte un organe de verrouillage (38) monté verrouillé sur la bague de serrage et de verrouillage (37) ensemble avec l'organe de guidage (36).

6. Dispositif selon l'une des revendications 4 et 5, **caractérisé en ce que** la vis de manœuvre (35) est partiellement logée dans un espace interne (75) ménagé dans le fourreau (32) et présente un orifice ménagé à une extrémité (70) dans laquelle est introduite un organe de butée (71).

7. Dispositif selon l'une quelconque des revendications 4 à 6, **caractérisé en ce que** le deuxième organe d'assujettissement (8) est monté mobile en rotation sur une extrémité libre (56) de l'insert télescopique (34) ; et/ou le premier organe d'assujettissement (6, 106) est monté mobile en rotation sur une extrémité libre (46) de la vis de manœuvre (35).

8. Dispositif selon l'une quelconque des revendications 4 à 7, **caractérisé en ce que** l'organe de guidage (36) comporte une paroi annulaire (63) en forme de flasque disposé en appui et à l'extérieur du fourreau (32), et une paroi cylindrique (65) en saillie de la paroi annulaire (63) et logée dans un espace interne (75) ménagé dans le fourreau (32) par emboîtement d'un côté du fourreau (32), et une pluralité de trous (64) sont formés dans la paroi annulaire (63) ; et la bague de serrage et de verrouillage (37) comporte une paroi annulaire (68) ayant un contour externe (72) qui est ici dentelé et qui est prévu pour venir en appui contre la paroi annulaire (63) de l'organe de guidage (36).

9. Dispositif selon la revendication 8, **caractérisé en ce que** le contour externe (72) dentelé est pourvu de creux pour permettre l'introduction d'une portion de l'organe de verrouillage (38) pour que, lorsqu'un creux du contour externe (72) se trouve en regard d'un trou (64) de la paroi annulaire (63) de l'organe de guidage (36), la portion de l'organe de verrouillage (38) puisse traverser à la fois un creux du contour externe (72) et un trou (64) respectif en vue d'immobiliser en rotation la bague de serrage et de verrouillage (37) ensemble avec l'organe de guidage (36).

10. Dispositif selon l'une des revendications 8 et 9, **caractérisé en ce que** l'organe de guidage (36) comporte une surface interne filetée (66) qui est traversée par la vis de manœuvre (35), avec une extrémité (70) qui se trouve à l'opposé de la paroi annulaire (63), et la bague de serrage et de verrouillage (37) comporte en outre une paroi cylindrique (67) traversée par la vis de manœuvre (35) et ayant une face interne (69) ménagée de sorte à former un système à double écrous.

11. Dispositif selon l'une quelconque des revendications 1 à 10, **caractérisé en ce qu'**il comporte une poignée de préhension (29) formée d'un manche (30) assujetti mécaniquement via une liaison pivot sur un manchon (31), lequel est monté serré sur le corps principal (5).

12. Dispositif selon l'une quelconque des revendications 1 à 11, **caractérisé en ce que** le premier organe d'assujettissement est d'un premier type (6) et est formé par une pièce en L avec rebord, pourvue d'une première branche (40), d'une deuxième branche (41) s'étendant depuis la première branche (40), d'un rebord (42) s'étendant depuis la première branche (40) à l'opposé de la deuxième branche (41), formant ainsi un espace de préhension et de réception (43) délimité par une face interne de contact (44) pour assurer l'interconnexion électrique avec le rail roulant (2) ; et/ou le deuxième organe d'assujettissement est d'un deuxième type (8) et est formé par une pièce en L, pourvue d'une première branche (50) et d'une deuxième branche (51) s'étendant depuis la première branche (50) et formant ainsi un espace de préhension et de réception (53) délimité par une face interne de contact (54) pour assurer l'interconnexion électrique avec le rail d'alimentation (3) ; et/ou le premier organe d'assujettissement est d'un troisième type (106) et est pourvu d'une paroi principale inclinée et/ou incurvée (180) ayant une face externe (181) configurée pour former essentiellement une face de contact pour venir en appui et au contact du rail roulant (2), et de crochets de fixation (182) s'étendant depuis un bord (183) de la paroi principale inclinée et/ou incurvée (180).

13. Dispositif selon l'une quelconque des revendications 1 à 12, **caractérisé en ce que** le rail roulant (2) est pourvu d'une base (10), d'une paroi principale (11) s'étendant sensiblement verticalement depuis la base (10), et d'une tête (12) reliée à la paroi principale (11) à l'opposé de la base (10) et qui est prévue pour former un guide de roulage pour un véhicule ferroviaire, avec la base (10) qui présente, en section, une forme globalement triangulaire présentant une face plane inférieure (13), deux bords (14) s'étendant depuis la face plane inférieure (13), et deux faces supérieures inclinées et/ou incurvées (15) s'étendant chacune depuis un bord (14) respectif et dirigées chacune vers le haut et vers la paroi principale (11), et **en ce que** ledit au moins un premier organe d'assujettissement (106) est monté mobile en rotation sur le corps principal (5) et est pourvu d'une paroi principale inclinée et/ou incurvée (180) ayant une face externe (181) configurée pour former essentiellement une face de contact pour venir en appui et au contact sur une des faces supérieures inclinées (15) de la base (10) du rail roulant (2) et aussi partiellement sur la paroi principale (11) à proximité immédiate de la face supérieure inclinée (15) de la base (10) du rail roulant (2) lorsque le premier organe de positionnement (106) est en prise sur le rail roulant (2).

14. Dispositif selon la revendication 13, **caractérisé en ce que** ledit au moins un premier organe d'assujettissement (106) est pourvu de crochets de fixation (182) s'étendant depuis un bord (183) de la paroi principale incurvée (180) et configuré pour venir en prise au moins sur le bord (14) de la base (10) du rail roulant (2) duquel s'étend la face supérieure inclinée (15) sur laquelle la face externe (181) est en appui, lorsque le premier organe de positionnement (106) est en prise sur le rail roulant (2).

15. Dispositif selon la revendication 14, **caractérisé en ce que** les crochets de fixation (182) présentent une forme de L ayant une première branche (184) s'étendant depuis le bord (183) et une deuxième branche (185) s'étendant depuis la première branche (184), et sont orientés de sorte que la deuxième branche (185) de chacun des crochets de fixation (182) s'étend du côté de la face externe (181), avec la première branche (184) de chaque crochet de fixation (182) qui est en appui sur le bord (14) tandis que la deuxième branche (185) de chaque crochet de fixation (182) est en appui sous la face plane inférieure (13) à proximité immédiate du bord (14) lorsque le premier organe de positionnement (106) est en prise sur le rail roulant (2).

16. Dispositif selon la revendication 15, **caractérisé en ce que** le premier organe de positionnement (106) est pourvu d'une pièce de fixation (145) en saillie d'une face interne (182) opposée à sa face externe (181) et par laquelle le premier organe d'assujettissement (106) est monté mobile en rotation sur le corps principal (5).

17. Ensemble comportant un dispositif d'interconnexion électrique (4) selon l'une quelconque des revendications 1 à 16 ainsi qu'un ou plusieurs accessoires, dont au moins un premier organe d'assujettissement d'un premier type (6) configuré pour être monté à une première extrémité (7) d'un corps principal (5) du dispositif d'interconnexion électrique (4) et pour être assujetti mécaniquement et électriquement au haut d'un rail roulant (2), au moins un deuxième organe d'assujettissement d'un deuxième type (8) configuré pour être monté à une deuxième extrémité (9) du corps principal (5) opposée à sa première extrémité (7), sur un insert télescopique (34) du corps principal (5), et pour être assujetti mécaniquement et électriquement au haut ou au bas d'un rail d'alimentation (3) en fonction de son orientation, et au moins un premier organe d'assujettissement du troisième type (106), différent de celui du premier type, configuré pour être monté à la première extrémité (7) du corps principal (5) et pour être assujetti mécaniquement et électriquement au bas du rail roulant (2).

18. Procédé d'interconnexion électrique et de mise à la terre d'au moins un rail ferroviaire roulant (2) avec un rail ferroviaire d'alimentation (3) à l'aide d'un dispositif d'interconnexion électrique (4) selon l'une quelconque des revendications 1 à 16, comportant les étapes de fournir un tel dispositif d'interconnexion électrique (4) et de le disposer entre le rail roulant (2) et le rail d'alimentation (3), de mettre en prise un premier organe d'assujettissement (6 ; 106) du dispositif d'interconnexion électrique sur le rail roulant, d'adapter la longueur du dispositif d'interconnexion électrique en déployant ou en rétractant un insert télescopique (34) du ou dans un fourreau (32) d'un corps principal (5) du dispositif d'interconnexion électrique, d'adapter l'orientation d'un deuxième organe d'assujettissement (8) du dispositif d'interconnexion électrique en tournant l'insert télescopique (34) dans et par rapport au fourreau (32), et de mettre en prise le deuxième organe d'assujettissement (8) sur le rail d'alimentation (2).

19. Procédé selon la revendication 18, comportant l'étape de sélectionner un premier organe d'assujettissement parmi l'un d'un premier type (6) configuré pour être monté à une première extrémité (7) du corps principal (5) et pour être assujetti mécaniquement et électriquement au haut du rail roulant (2), et d'un troisième type (106), différent de celui du premier type, configuré pour être monté à la première extrémité (7) du corps principal (5) et pour être assujetti mécaniquement et électriquement au bas du rail roulant (2).

## Patentansprüche

1. Elektrische Verbindungsvorrichtung zur Erdung von Eisenbahnschienen, umfassend einen Hauptkörper (5), mindestens ein erstes Fixierungselement (6, 106), das an einem ersten Ende (7) des Hauptkörpers (5) montiert ist und so konfiguriert ist, dass es mechanisch und elektrisch an eine Rollbahnschiene (2) fixiert werden kann, mindestens ein zweites Fixierungselement (8), das an einem zweiten Ende (9) des Hauptkörpers (5), das dem ersten Ende (7) gegenübersteht, montiert ist und so konfiguriert ist, dass es mechanisch und elektrisch an eine Versorgungsbahnschiene (3) fixiert werden kann, wobei der Hauptkörper (5) mit mindestens einer Hülse (32) und mindestens einem gegenüber der Hülse (32) verschieb- und drehbeweglich montierten Teleskopeinsatz (34) versehen ist, wobei eines von dem mindestens einen ersten Fixierungselement (6, 106) und dem mindestens einen zweiten Fixierungselement (8) mechanisch an ein freies Ende (56) des Teleskopeinsatzes (34) fixiert sind; wodurch die elektrische Verbindungsvorrichtung (4) so konfiguriert ist, dass sie eine eingefahrene Konfiguration, in der der Teleskopeinsatz (34) in die Hülse (32) eingeführt wird, und eine ausgefahrene Konfiguration, in der der Teleskopeinsatz (34) mindestens teilweise aus der Hülse (32) herausgezogen ist, zulässt, **dadurch gekennzeichnet, dass** eines von dem mindestens einen ersten Fixierungselement (6, 106) und dem mindestens einen zweiten Fixierungselement (8) so konfiguriert ist, dass es unabhängig von der Konfiguration der elektrischen Verbindungsvorrichtung (4) in einer vorbestimmten Ausrichtung aus einer Vielzahl von Ausrichtungen angeordnet ist.

2. Vorrichtung nach Anspruch 1, **dadurch gekennzeichnet, dass** sie mit Positionierungsöffnungen (73), die sowohl in der Hülse (32) als auch im Teleskopeinsatz (34) ausgebildet sind, sowie einem Befestigungselement (74) versehen ist, das in den Positionierungsöffnungen (73) der Hülse (32) und des Teleskopeinsatzes (34) montiert ist, wenn sie sich gegenüberstehen; wodurch der Teleskopeinsatz (34) in einer Vielzahl von unterschiedlichen Positionen relativ zur Hülse (32) gehalten werden kann.

3. Vorrichtung nach einem der Ansprüche 1 und 2, **dadurch gekennzeichnet, dass** der Hauptkörper (5) einen Spannmechanismus (33) umfasst, der an der Hülse (34) fixiert ist, die sich zum ersten Ende (7) des Hauptkörpers (5) hin erstreckt, und das erste Fixierungselement (6, 106) an dem Spannmechanismus (33) montiert ist.

4. Vorrichtung nach Anspruch 3, **dadurch gekennzeichnet, dass** der Spannmechanismus (33) mit einer Manövrierschraube (35), einem Führungselement (36), das teilweise in der Hülse (32) untergebracht ist und zum Führen der Manövrierschraube (35) vorgesehen ist, und einem Klemm- und Verriegelungsring (37) versehen ist, der drehbar auf der Manövrierschraube (35) zwischen dem ersten Ende (7) des Hauptkörpers (5) und dem Führungselement (36) montiert ist.

5. Vorrichtung nach Anspruch 4, **dadurch gekennzeichnet, dass** in einer verriegelten Konfiguration der Vorrichtung der Klemm- und Verriegelungsring (37) am Führungselement (36) anliegend angeordnet ist und die elektrische Verbindungsvorrichtung (4) ein Verriegelungselement (38) umfasst, das zusammen mit dem Führungselement (36) am Klemm- und Verriegelungsring (37) verriegelt montiert ist.

6. Vorrichtung nach einem der Ansprüche 4 und 5, **dadurch gekennzeichnet, dass** die Manövrierschraube (35) teilweise in einem in der Hülse (32) ausgebildeten Innenraum (75) untergebracht ist und eine an einem Ende (70) ausgebildete Öffnung aufweist, in die ein Anschlagelement (71) eingeführt wird.

7. Vorrichtung nach einem der Ansprüche 4 bis 6, **dadurch gekennzeichnet, dass** das zweite Fixierungselement (8) drehbar an einem freien Ende (56) des Teleskopeinsatzes (34) montiert ist; und/oder das erste Fixierungselement (6, 106) drehbar an einem freien Ende (46) der Manövrierschraube (35) montiert ist.

8. Vorrichtung nach einem der Ansprüche 4 bis 7, **dadurch gekennzeichnet, dass** das Führungselement (36) eine ringförmige Wand (63) in Form eines Flansches, der in Anlage und außerhalb der Hülse (32) angeordnet ist, und eine zylindrische Wand (65) umfasst, die von der ringförmigen Wand (63) vorsteht und in einem Innenraum (75) aufgenommen ist, der in der Hülse (32) durch Einstecken auf einer Seite der Hülse (32) ausgebildet ist, und eine Vielzahl von Löchern (64) in der ringförmigen Wand (63) ausgebildet sind; und der Klemm- und Verriegelungsring (37) eine ringförmige Wand (68) mit einer Außenkontur (72) umfasst, die hier gezackt ist und die dazu vorgesehen ist, an der ringförmigen Wand (63) des Führungselements (36) anzuliegen.

9. Vorrichtung nach Anspruch 8, **dadurch gekennzeichnet, dass** die gezackte Außenkontur (72) mit Vertiefungen versehen ist, um das Einführen eines Abschnitts des Verriegelungselements (38) zu ermöglichen, so dass, wenn sich eine Vertiefung der Außenkontur (72) gegenüber einem Loch (64) in der ringförmigen Wand (63) des Führungselements (36) befindet, der Abschnitt des Verriegelungselements (38) sowohl eine Vertiefung der Außenkontur (72) als auch ein jeweiliges Loch (64) durchdringen kann, um den Klemm- und Verriegelungsring (37) zusammen mit dem Führungselement (36) drehfest zu sichern.

10. Vorrichtung nach einem der Ansprüche 8 und 9, **dadurch gekennzeichnet, dass** das Führungselement (36) eine innere Gewindeoberfläche (66) umfasst, die von der Manövrierschraube (35) durchquert wird, mit einem Ende (70), das sich gegenüber der ringförmigen Wand (63) befindet, und der Klemm- und Verriegelungsring (37) ferner eine zylindrische Wand (67) umfasst, die von der Manövrierschraube (35) durchquert wird und eine innere Fläche (69) aufweist, die so ausgebildet ist, dass sie ein Doppelmuttersystem bildet.

11. Vorrichtung nach einem der Ansprüche 1 bis 10, **dadurch gekennzeichnet, dass** sie einen Handgriff (29) umfasst, der aus einem Schaft (30) gebildet ist, der mechanisch über eine Drehverbindung an einer Muffe (31) befestigt ist, die fest am Hauptkörper (5) montiert ist.

12. Vorrichtung nach einem der Ansprüche 1 bis 11, **dadurch gekennzeichnet, dass** das erste Fixierungselement von einem ersten Typ (6) ist und durch ein L-förmiges Teil mit Rand gebildet wird, das mit einem ersten Schenkel (40), einem zweiten Schenkel (41), der sich von dem ersten Schenkel (40) aus erstreckt, und einem Rand (42) versehen ist, der sich von dem ersten Schenkel (40) gegenüber dem zweiten Schenkel (41) erstreckt, wodurch ein Greif- und Aufnahmeraum (43) gebildet wird, der von einer inneren Kontaktfläche (44) begrenzt ist, um die elektrische Verbindung mit der Rollschiene (2) zu gewährleisten; und/oder das zweite Fixierungselement von einem zweiten Typ (8) ist und durch ein L-förmiges Teil gebildet wird, das mit einem ersten Schenkel (50) und einem zweiten Schenkel (51) versehen ist, der sich von dem ersten Schenkel (50) aus erstreckt und somit einen Greif- und Aufnahmeraum (53) bildet, der durch eine innere Kontaktfläche (54) begrenzt ist, um die elektrische Verbindung mit der Versorgungsschiene (3) zu gewährleisten; und/oder das erste Fixierungselement von einem dritten Typ (106) ist und mit einer geneigten und/oder gekrümmten Hauptwand (180) mit einer äußeren Fläche (181), die so konfiguriert ist, dass sie im Wesentlichen eine Kontaktfläche bildet, um an der Rollschiene (2) anzuliegen und diese zu berühren, und mit Befestigungshaken (182) versehen ist, die sich von einem Rand (183) der geneigten und/oder gekrümmten Hauptwand (180) aus erstrecken.

13. Vorrichtung nach einem der Ansprüche 1 bis 12, **dadurch gekennzeichnet, dass** die Rollschiene (2) mit einem Sockel (10), einer Hauptwand (11), die sich im Wesentlichen vertikal von dem Sockel (10) erstreckt, und einem Aufsatz (12) versehen ist, der mit der Hauptwand (11) auf der gegenüberliegenden Seite des Sockels (10) verbunden ist und der dazu vorgesehen ist, eine Rollführung für ein Bahnfahrzeug zu bilden, mit dem Sockel (10), der im Querschnitt eine allgemein dreieckige Form aufweist, die eine untere ebene Fläche (13), zwei Ränder (14), die sich von der unteren ebenen Fläche (13) erstrecken, und zwei geneigte und/oder gekrümmte obere Flächen (15) aufweist, die sich jeweils von einem entsprechenden Rand (14) aus erstrecken und jeweils nach oben und zur Hauptwand (11) hin gerichtet sind, und dass das mindestens eine erste Fixierungselement (106) drehbar an dem Hauptkörper (5) montiert ist und mit einer geneigten und/oder gekrümmten Hauptwand (180) versehen ist, die eine äußere Fläche (181) aufweist, die so konfiguriert ist, dass sie im Wesentlichen eine Kontaktfläche bildet, um in Anlage und Kontakt mit auf einer der geneigten oberen Flächen (15) des Sockels (10) der Rollschiene (2) und auch teilweise auf der Hauptwand (11) in unmittelbarer Nähe der geneigten oberen Fläche (15) des Sockels (10) der Rollschiene (2) zu kommen, wenn das erste Positionierungselement (106) mit der Rollschiene (2) in Eingriff ist.

14. Vorrichtung nach Anspruch 13, **dadurch gekennzeichnet, dass** das mindestens eine erste Fixierungselement (106) mit Befestigungshaken (182) versehen ist, die sich von einem Rand (183) der gekrümmten Hauptwand (180) aus erstrecken und so konfiguriert sind, dass sie mindestens in den Rand (14) des Sockels (10) der Rollschiene (2) eingreifen, von der sich die geneigte obere Fläche (15) erstreckt, an der die äußere Fläche (181) anliegt, wenn das erste Positionierungselement (106) in Eingriff mit der Rollschiene (2) ist.

15. Vorrichtung nach Anspruch 14, **dadurch gekennzeichnet, dass** die Befestigungshaken (182) eine L-Form aufweisen, die einen ersten Schenkel (184), der sich von dem Rand (183) aus erstreckt, und einen zweiten Schenkel (185) aufweist, der sich von dem ersten Schenkel (184) aus erstreckt, die so ausgerichtet sind, dass sich der zweite Schenkel (185) jedes der Befestigungshaken (182) auf der Seite der äußeren Fläche (181) erstreckt, wobei der erste Schenkel (184) jedes Befestigungshakens (182) an dem Rand (14) anliegt, während der zweite Schenkel (185) jedes Befestigungshakens (182) unter der unteren ebenen Fläche (13) in unmittelbarer Nähe des Randes (14) anliegt, wenn das erste Positionierungselement (106) in Eingriff mit der Rollschiene (2) ist.

16. Vorrichtung nach Anspruch 15, **dadurch gekennzeichnet, dass** das erste Positionierungselement (106) mit einem Befestigungsteil (145) versehen ist, das von einer seiner äußeren Fläche (181) gegenüberliegenden inneren Fläche (182) vorsteht und durch das das erste Fixierungselement (106) drehbar am Hauptkörper (5) montiert ist.

17. Baugruppe, umfassend eine elektrische Verbindungsvorrichtung (4) nach einem der Ansprüche 1 bis 16 sowie ein oder mehrere Zubehörteile, darunter mindestens ein erstes Fixierungselement eines ersten Typs (6), das so konfiguriert ist, dass es an einem ersten Ende (7) eines Hauptkörpers (5) der elektrischen Verbindungsvorrichtung (4) montiert ist und mechanisch und elektrisch an der Oberseite einer Rollschiene (2) fixiert werden kann, mindestens ein zweites Fixierungselement eines zweiten Typs (8), das so konfiguriert ist, dass es an einem zweiten Ende (9) des Hauptkörpers (5), das seinem ersten Ende (7) gegenüberliegt, an einem Teleskopeinsatz (34) des Hauptkörpers (5) montiert und je nach seiner Ausrichtung mechanisch und elektrisch an der Ober- oder Unterseite einer Versorgungsschiene (3) fixiert werden kann, und mindestens ein erstes Fixierungselement des dritten Typs (106), das sich von dem des ersten Typs unterscheidet und so konfiguriert ist, dass es am ersten Ende (7) des Hauptkörpers (5) montiert und mechanisch und elektrisch an der Unterseite der Rollschiene (2) befestigt werden kann.

18. Verfahren zur elektrischen Verbindung und Erdung mindestens einer Rollbahnschiene (2) mit einer Versorgungsbahnschiene (3) mithilfe einer elektrischen Verbindungsvorrichtung (4) nach einem der Ansprüche 1 bis 16, umfassend die Schritte des Bereitstellens einer solchen elektrischen Verbindungsvorrichtung (4) und des Anordnens dieser zwischen der Rollschiene (2) und der Versorgungsschiene (3), des Ineingriffbringens eines ersten Fixierungselements (6; 106) der elektrischen Verbindungsvorrichtung mit der Rollschiene, des Anpassens der Länge der elektrischen Verbindungsvorrichtung durch Ausfahren oder Einfahren eines Teleskopeinsatzes (34) aus oder in eine Hülse (32) eines Hauptkörpers (5) der elektrischen Verbindungsvorrichtung, des Anpassens der Ausrichtung eines zweiten Fixierungselements (8) der elektrischen Verbindungsvorrichtung durch Drehen des Teleskopeinsatzes (34) in und relativ zur Hülse (32) und des Eingriffbringens des zweiten Fixierungselements (8) mit der Versorgungsschiene (2).

19. Verfahren nach Anspruch 18, umfassend den Schritt des Auswählens eines ersten Fixierungselements aus einem ersten Typ (6), das so konfiguriert ist, dass es an einem ersten Ende (7) des Hauptkörpers (5) montiert und mechanisch und elektrisch an der Oberseite der Rollschiene (2) fixiert werden kann, und eines dritten Typs (106), der sich von dem des ersten Typs unterscheidet, der so konfiguriert ist, dass er an dem ersten Ende (7) des Hauptkörpers (5) montiert und mechanisch und elektrisch an der Unterseite der Rollschiene (2) fixiert werden kann.

## Claims

1. Electrical interconnection device for grounding railway rails, which device comprises a main body (5), at least one first attachment member (6, 106) mounted at a first end (7) of the main body (5) and configured to be mechanically and electrically attached to a so-called running rail (2), at least one second attachment member (8) mounted at a second end (9) of the main body (5), opposite the first end (7), and configured to be mechanically and electrically attached to a so-called power supply rail (3), wherein the main body (5) is provided with at least one sleeve (32) and at least one telescopic insert (34) mounted so as to be able to move in translation and in rotation relative to the sleeve (32), with one of said at least one first attachment member (6, 106) and of said at least one second attachment member (8) being mechanically attached to a free end (56) of the telescopic insert (34); whereby the electrical interconnection device (4) is configured to accept a retracted configuration in which the telescopic insert (34) is inserted into the sleeve (32) and a deployed configuration in which the telescopic insert (34) is at least partially extracted from the sleeve (32), **characterised in that** one of said at least one first attachment member (6, 106) and of said at least one second attachment member (8) is configured to be disposed in a predetermined orientation from among a plurality of orientations, regardless of the configuration of the electrical interconnection device (4).

2. Device according to claim 1, **characterised in that** it is provided with positioning orifices (73) made both in the sleeve (32) and in the telescopic insert (34), as well as a fastening member (74) mounted in the positioning orifices (73) of the sleeve (32) and of the telescopic insert (34) when facing one another; whereby the telescopic insert (34) can be held in a plurality of different positions with respect to the sleeve (32).

3. Device according to one of claims 1 and 2, **characterised in that** the main body (5) comprises a clamping mechanism (33) attached to the sleeve (34) extending towards the first end (7) of the main body (5), and the first attachment member (6, 106) is mounted on the clamping mechanism (33).

4. Device according to claim 3, **characterised in that** the clamping mechanism (33) is provided with an operating screw (35), a guide member (36) partially housed in the sleeve (32) and intended to guide the operating screw (35), and a clamping and locking ring (37) rotatably mounted on the operating screw (35), between the first end (7) of the main body (5) and the guide member (36).

5. Device according to claim 4, **characterised in that**, when the device is in a locked configuration, the clamping and locking ring (37) is disposed in abutment against the guide member (36) and the electrical interconnection device (4) comprises a locking member (38) mounted locked on the clamping and locking ring (37) together with the guide member (36).

6. Device according to one of claims 4 and 5, **characterised in that** the operating screw (35) is partially housed in an internal space (75) provided in the sleeve (32) and has an orifice made at one end (70) into which a stop member (71) is introduced.

7. Device according to any one of claims 4 to 6, **characterised in that** the second attachment member (8) is rotatably mounted on a free end (56) of the telescopic insert (34); and/or the first attachment member (6, 106) is rotatably mounted on a free end (46) of the operating screw (35).

8. Device according to any one of claims 4 to 7, **characterised in that** the guide member (36) comprises an annular wall (63) in the form of a flange, which bears against and outside the sleeve (32), and a cylindrical wall (65) protruding from the annular wall (63) and housed in an internal space (75) provided in the sleeve (32) by interlocking on one side of the sleeve (32), and a plurality of holes (64) are made in the annular wall (63); and the clamping and locking ring (37) comprises an annular wall (68) having an outer contour (72) which is serrated here, and which is provided to bear against the annular wall (63) of the guide member (36).

9. Device according to claim 8, **characterised in that** the serrated outer contour (72) is provided with recesses to allow the introduction of a portion of the locking member (38) so that, when a recess in the outer contour (72) faces a hole (64) in the annular wall (63) of the guide member (36), the portion of the locking member (38) can pass through both a recess in the outer contour (72) and a hole (64) respectively with a view to rotationally immobilising the clamping and locking ring (37) together with the guide member (36).

10. Device according to one of claims 8 and 9, **characterised in that** the guide member (36) comprises an inner threaded surface (66) through which passes the operating screw (35), with an end (70) which is located opposite the annular wall (63), and the clamping and locking ring (37) further comprises a cylindrical wall (67) through which passes the operating screw (35), and which has an inner face (69) arranged so as to form a double nut system.

11. Device according to any one of claims 1 to 10, **characterised in that** it comprises a grip handle (29) formed of a shaft (30) mechanically attached via a pivot connection to a bushing (31), which is mounted tightly on the main body (5).

12. Device according to any one of claims 1 to 11, **characterised in that** the first attachment member is of a first type (6) and is formed by an L-shaped piece with a rim, provided with a first branch (40), with a second branch (41) extending from the first branch (40), and with a rim (42) extending from the first branch (40) opposite the second branch (41), thus forming a gripping and receiving space (43) delimited by an inner contact face (44) to ensure the electrical interconnection with the running rail (2); and/or the second attachment member is of a second type (8) and is formed by an L-shaped piece, provided with a first branch (50) and with a second branch (51) extending from the first branch (50) and thus forming a gripping and receiving space (53) delimited by an inner contact face (54) to ensure the electrical interconnection with the power supply rail (3); and/or the first attachment member is of a third type (106) and is provided with an inclined and/or curved main wall (180) having an outer face (181) configured to substantially form a contact face to come into bearing contact with the running rail (2), and fastening hooks (182) extending from an edge (183) of the inclined and/or curved main wall (180).

13. Device according to any one of claims 1 to 12, **characterised in that** the running rail (2) is provided with a base (10), with a main wall (11) extending substantially vertically from the base (10), and with a head (12) connected to the main wall (11) opposite the base (10) and which is intended to form a rolling guide for a rail vehicle, with the cross-section of the base (10) having an overall triangular shape that has a lower flat face (13), two edges (14) extending from the lower flat face (13), and two inclined and/or curved upper faces (15) each extending from a respective edge (14) and each directed upwards and towards the main wall (11), and **in that** said at least one first attachment member (106) is rotatably mounted on the main body (5) and is provided with an inclined and/or curved main wall (180) having an outer face (181) configured to substantially form a contact face to come into bearing contact with one of the inclined upper faces (15) of the base (10) of the running rail (2) and also partially on the main wall (11) in immediate proximity to the inclined upper face (15) of the base (10) of the running rail (2) when the first positioning member (106) is engaged with the running rail (2).

14. Device according to claim 13, **characterised in that** said at least one first attachment member (106) is provided with fastening hooks (182) extending from an edge (183) of the curved main wall (180) and configured to engage at least on the edge (14) of the base (10) of the running rail (2) from which extends the inclined upper face (15) on which the outer face (181) bears, when the first positioning member (106) is engaged on the running rail (2).

15. Device according to claim 14, **characterised in that** the fastening hooks (182) have an L-shape having a first branch (184) extending from the edge (183) and a second branch (185) extending from the first branch (184), and are oriented so that the second branch (185) of each of the fastening hooks (182) extends from the side of the outer face (181), with the first branch (184) of each fastening hook (182) bearing on the edge (14) whereas the second branch (185) of each fastening hook (182) bears beneath the lower flat face (13) in immediate proximity to the edge (14) when the first positioning member (106) is engaged on the running rail (2).

16. Device according to claim 15, **characterised in that** the first positioning member (106) is provided with a fastening part (145) protruding from an inner face (182) opposite its outer face (181) and via which the first attachment member (106) is rotatably mounted on the main body (5).

17. Assembly comprising an electrical interconnection device (4) according to any one of claims 1 to 16 as well as one or more accessories, including at least one first attachment member of a first type (6) configured to be mounted at a first end (7) of a main body (5) of the electrical interconnection device (4) and to be mechanically and electrically attached at the top of a running rail (2), at least one second attachment member of a second type (8) configured to be mounted at a second end (9) of the main body (5) opposite its first end (7), on a telescopic insert (34) of the main body (5), and to be mechanically and electrically attached at the top or bottom of a power supply rail (3) depending on its orientation, and at least one first attachment member of the third type (106), different from that of the first type, configured to be mounted at the first end (7) of the main body (5) and to be mechanically and electrically attached to the bottom of the running rail (2).

18. Method for electrically interconnecting and grounding at least one running rail (2) with a power supply rail (3) using an electrical interconnection device (4) according to any one of claims 1 to 16, comprising the steps of providing such an electrical interconnection device (4) and of disposing it between the running rail (2) and the power supply rail (3), engaging a first attachment member (6; 106) of the electrical interconnection device on the running rail, adapting the length of the electrical interconnection device by extending or retracting a telescopic insert (34) from or into a sleeve (32) of a main body (5) of the electrical interconnection device, adapting the orientation of a second attachment member (8) of the electrical interconnection device by rotating the telescopic insert (34) in and with respect to the sleeve (32), and engaging the second attachment member (8) on the power supply rail (2).

19. Method according to claim 18, comprising the step of selecting a first attachment member from one of among a first type (6) configured to be mounted at a first end (7) of the main body (5) and to be mechanically and electrically attached to the top of the running rail (2), and a third type (106), which is different from that of the first type, configured to be mounted at the first end (7) of the main body (5) and to be mechanically and electrically attached to the bottom of the running rail (2).
